# DEMANDE DE BREVET EUROPEEN

(11) **EP 4 656 924 A1**
(43) Date de publication de la demande: **03.12.2025**
(21) Numéro de dépôt: 25179783.3
(22) Date de dépôt: 30.05.2025
(51) Int. Cl.: F16L 37/23, F16L 37/34

(54) **ELÉMENT DE RACCORD FLUIDIQUE ET RACCORD FLUIDIQUE**

(30) Priorité: 31.05.2024 FR 2405717
(71) Demandeur: Staubli Faverges, 74210 Faverges-Seythenex (FR)
(72) Inventeur: MOREL, Frédéric, 74210 LATHUILE (FR); MARQUES BARROCA, Serafim, 73200 ALBERTVILLE (FR); DURIEUX, Christophe, 73200 GILLY SUR ISERE (FR)
(74) Mandataire: Lavoix

(57) **Abrégé**

Elément de raccord fluidique (1), comprenant : un corps (2) ; des billes de verrouillage (3) ; une bague de verrouillage (5), coopérant à coulissement avec le corps (2) et ayant une surface radiale interne de recouvrement (51) pour maintenir et libérer les billes de verrouillage (3) ; une rondelle (7), pour guider le coulissement de la bague de verrouillage (5), interposée entre le corps (2) et la bague de verrouillage (5), un ressort (63) étant interposé entre le corps (2) et la rondelle (7) pour repousser la bague de verrouillage (5) via une surface arrière (57). Le diamètre interne minimal (D53) de la bague de verrouillage (5) en arrière de la surface arrière (57) est supérieur ou égal au diamètre externe (D72) de la rondelle (7). Le diamètre interne (D71) de la rondelle (7) est strictement inférieur au diamètre (D51) de la surface radiale interne de recouvrement (51).

## Description

La présente invention concerne un élément de raccord fluidique et un raccord fluidique comprenant un tel élément de raccord fluidique.

US4988129A décrit un raccord avec un élément mâle et un élément femelle. L'élément femelle comprend un corps cylindrique pour l'emmanchement de l'élément mâle, ainsi que des billes de verrouillage portées par le corps cylindrique. Une manche de verrouillage est montée sur l'extérieur du corps cylindrique. Un ressort hélicoïdal est disposé entre une partie de retenue appartenant au corps cylindrique et un rebord intérieur appartenant à la manche de verrouillage. La manche de verrouillage sert à maintenir et libérer les billes de verrouillage, en fonction de sa position.

La bague de verrouillage est montée par l'avant du corps cylindrique et est guidée radialement sur le corps cylindrique par coopération radiale, non seulement d'une première surface radiale externe, à l'avant du corps avec une surface de rebord de la bague, qui sert aussi à maintenir les billes pour le verrouillage en position de verrouillage, mais aussi d'une deuxième surface radiale externe, plus à l'arrière du corps, avec une surface radiale interne de la bague, qui est agencée en arrière du ressort.

Ces dispositions imposent des contraintes concernant les dimensions de l'élément femelle. En effet, la dimension radiale interne minimale de la manche de verrouillage détermine le diamètre de la première surface radiale externe, à l'avant du corps cylindrique, pour le guidage radial de la manche de verrouillage. L'appui du ressort sur la manche de verrouillage détermine le diamètre de la deuxième surface radiale externe de guidage en arrière du ressort.

Ainsi, même si le matériau utilisé pour l'avant du corps cylindrique autorise une épaisseur radiale réduite de cette partie du corps, la compacité radiale de l'élément de raccord femelle ne peut être réduite.

L'un des objectifs de l'invention est alors de proposer un nouvel élément de raccord fluidique qui, tout en conservant une construction simple, est particulièrement compacte, radialement et longitudinalement, permet un plus grand passage de fluide à encombrement égal et permet un guidage radial performant de la bague de verrouillage sur le corps sans coincement, en particulier dans un environnement poussiéreux.

A cet effet, l'invention a pour objet un élément de raccord fluidique, comprenant :
- un corps centré sur un axe longitudinal, délimitant un conduit interne et étant destiné à être relié à une canalisation, le conduit interne débouchant hors du corps à une embouchure du corps, suivant une direction longitudinale avant parallèle à l'axe longitudinal, le corps étant configuré pour recevoir un élément de raccord fluidique complémentaire, emmanché dans le conduit interne, via l'embouchure, suivant une direction longitudinale arrière opposée à la direction longitudinale avant ;
- des billes de verrouillage, mobiles dans des logements de réception du corps entre :
   - une position radiale interne de verrouillage, dans laquelle les billes de verrouillage dépassent dans le conduit interne pour s'opposer à un retrait de l'élément de raccord fluidique complémentaire hors du conduit interne, dans une configuration accouplée de l'élément de raccord fluidique et de l'élément de raccord fluidique complémentaire, et
   - une position radiale externe de déverrouillage, dans laquelle les billes de verrouillage ne s'opposent pas au retrait de l'élément de raccord fluidique complémentaire hors du corps;
- une bague de verrouillage, le corps et la bague de verrouillage étant conformés pour que la bague de verrouillage soit montée autour du corps par engagement autour du corps par l'embouchure suivant la direction longitudinale arrière, la bague de verrouillage ainsi montée étant coulissante par rapport au corps le long de l'axe longitudinal, entre :
   - une position avancée de maintien, dans laquelle une surface radiale interne de recouvrement, appartenant à la bague de verrouillage, est apte à coopérer avec les billes de verrouillage pour maintenir les billes de verrouillage en position radiale interne de verrouillage, le diamètre interne minimal de la bague de verrouillage en arrière de la surface radiale interne de recouvrement étant strictement supérieur au diamètre de la surface radiale interne de recouvrement, et
   - une position reculée de libération, dans laquelle la bague de verrouillage ne s'oppose pas à la mobilité des billes de verrouillage vers leur position radiale externe de déverrouillage ; et
- un ressort, monté autour du corps et apte à repousser la bague de verrouillage vers la position avancée de maintien.

Selon l'invention :
- l'élément de raccord fluidique comprend en outre une rondelle, interposée radialement entre le corps et la bague de verrouillage, le ressort étant interposé longitudinalement entre le corps et la rondelle, alors que la rondelle est apte à venir en appui contre une surface arrière de la bague de verrouillage suivant la direction longitudinale avant pour repousser la bague de verrouillage vers la position avancée de maintien ;
- le diamètre interne minimal de la bague de verrouillage en arrière de la surface arrière est supérieur ou égal au diamètre externe de la rondelle ;
- le diamètre interne de la rondelle est strictement inférieur au diamètre de la surface radiale interne de recouvrement de la bague de verrouillage ;
- dans toutes les positions longitudinales de la bague de verrouillage par rapport au corps entre la position avancée de maintien et la position reculée de libération :
   - la rondelle est apte à coopérer radialement avec une première surface radiale interne de la bague de verrouillage et avec une première surface radiale externe du corps pour le guidage radial de la bague de verrouillage par rapport au corps, et
   - la bague de verrouillage est apte à coopérer radialement avec une deuxième surface radiale externe du corps pour le guidage radial de la bague de verrouillage par rapport au corps, le diamètre de la deuxième surface radiale externe étant strictement supérieur au diamètre de la première surface radiale externe ;
- le corps forme d'un seul tenant l'embouchure, les logements de réception et la deuxième surface radiale externe; et
- la première surface radiale interne et la surface arrière délimitent un lamage interne de la bague de verrouillage pour la réception de la rondelle, le lamage interne étant agencé suivant la direction longitudinale avant par rapport à la deuxième surface radiale externe et suivant la direction longitudinale arrière par rapport aux billes de verrouillage.

Une idée à la base de l'invention est que, le fait de prévoir la rondelle combinée à la bague de verrouillage permet de positionner le ressort à une distance radiale plus proche du conduit interne, à diamètre interne de conduit interne égal par ailleurs. La compacité radiale en est améliorée. Cela permet aussi que le montage de la bague de verrouillage par engagement autour du corps via l'embouchure suivant la direction longitudinale arrière soit effectué alors que les billes de verrouillage sont déjà montées dans les logements de réception. Le fait de pouvoir monter les billes de verrouillage à l'avance évite d'avoir à augmenter la longueur du ressort, ce qui serait requis pour permettre à la bague de verrouillage de dégager les logements de réception pour effectuer un montage des billes de verrouillage après le montage de la bague de verrouillage. La compacité longitudinale en est améliorée, ainsi que l'ergonomie. Cela limite en outre l'effort de ressort.

Suivant d'autres aspects avantageux de l'invention, l'invention comprend une ou plusieurs des caractéristiques suivantes, prises isolément ou suivant toutes les combinaisons techniquement possibles :
- La rondelle est une bague annulaire fermée et la rondelle et le corps sont conformés pour que la rondelle soit montée autour du corps par engagement autour du corps par l'embouchure suivant la direction longitudinale arrière.
- La bague de verrouillage comprend une paroi radiale interne de dégagement, dont le diamètre interne est strictement supérieur au diamètre de la première surface radiale interne et qui est agencée suivant la direction longitudinale arrière par rapport au lamage interne ; et la longueur longitudinale de la paroi radiale interne de dégagement est supérieure à la longueur longitudinale du lamage interne.
- La bague de verrouillage comprend une deuxième surface radiale interne, par l'intermédiaire de laquelle la bague de verrouillage coopère radialement avec la deuxième surface radiale externe ; le diamètre de la première surface radiale interne et le diamètre de la deuxième surface radiale interne sont égaux ; et la paroi radiale interne de dégagement est agencée, parallèlement à la direction longitudinale arrière, entre la première surface radiale interne et la deuxième surface radiale interne.
- La hauteur radiale du lamage interne est comprise entre 0,3 fois et 0,6 fois la hauteur radiale maximale de la rondelle.
- La surface radiale interne de recouvrement débouche longitudinalement dans le lamage interne.
- La rondelle est de section externe rectangulaire, formant quatre arêtes qui sont chanfreinées.
- La hauteur radiale maximale de la rondelle est supérieure ou égale à la longueur longitudinale maximale de la rondelle.
- L'épaisseur radiale du corps au niveau des logements de réception est comprise entre 0,5 et 0,6 fois le diamètre des billes de verrouillage.
- La rondelle est reçue de manière démontable dans le lamage interne.
- La hauteur radiale maximale de la rondelle est supérieure ou égale à la hauteur radiale du ressort.
- L'élément de raccord fluidique comprend en outre une soupape et un joint d'étanchéité, qui est disposé dans une gorge ménagée dans le corps longitudinalement à hauteur de la deuxième surface radiale externe, le joint d'étanchéité étant configuré pour coopérer avec la soupape lorsque l'élément de raccord fluidique est dans une configuration désaccouplée.

L'invention concerne également un raccord fluidique comprenant l'élément de raccord fluidique tel que décrit précédemment ; et l'élément de raccord fluidique complémentaire, qui comprend un corps complémentaire pourvu d'une gorge de verrouillage, configurée pour recevoir les billes de verrouillage lorsque le raccord fluidique est dans la configuration accouplée.

Suivant d'autres aspects avantageux de l'invention, l'invention comprend une ou plusieurs des caractéristiques suivantes, prises isolément ou suivant toutes les combinaisons techniquement possibles :
- Le corps complémentaire comprend une surface externe étagée ; le corps comprend une surface interne étagée, délimitant le conduit interne ; et la surface externe étagée et la surface interne étagée sont configurées pour coopérer par complémentarité de formes au cours de l'emmanchement de l'élément de raccord fluidique complémentaire dans le conduit interne.
- L'élément de raccord fluidique comprend en outre un fourreau, qui est monté autour du corps et de la bague de verrouillage et qui comprend une extrémité avant, solidaire longitudinalement de la bague de verrouillage, et une extrémité arrière, solidaire longitudinalement du corps, le fourreau étant déformé élastiquement lorsque la bague de verrouillage se déplace entre la position avancée de maintien et la position reculée de libération ; l'élément de raccord fluidique complémentaire comprend un joint d'étanchéité, qui est porté par une surface externe du corps complémentaire ; et la bague de verrouillage comprend une surface avant, qui coopère longitudinalement avec le joint d'étanchéité de l'élément de raccord fluidique complémentaire lorsque le raccord fluidique est en configuration accouplée.

L'invention apparaîtra plus clairement à la lecture de la description qui va suivre, donnée uniquement à titre d'exemple non limitatif, et faite en référence aux dessins dans lesquels :
[FIG 1] la figure 1 est une coupe longitudinale d'un raccord fluidique, selon un premier mode de réalisation de l'invention, comprenant un élément de raccord fluidique et un élément de raccord fluidique complémentaire, montrés dans une configuration désaccouplée.
[FIG 2] la figure 2 inclut une vue A), qui est une coupe similaire à celle de la figure 1, où le raccord fluidique est en cours d'accouplement et une vue B), qui est une coupe du raccord suivant le trait de coupe IIb-IIb montré sur la vue A), avec le raccord fluidique dans une configuration accouplée, la vue B) montrant aussi un trait de coupe I-I selon lequel les coupes de la figure 1 et de la vue A) de la figure 2 sont réalisées.
[FIG 3] la figure 3 inclut une vue A) qui montre un détail du cadre II de la figure 1, à plus grande échelle, et une vue B) qui est une coupe similaire à celle de la figure 1, montrant une partie de l'élément de raccord fluidique des figures précédentes.
[FIG 4] la figure 4 est une perspective éclatée de l'élément de raccord fluidique des figures précédentes.
[FIG 5] la figure 5 est une coupe longitudinale d'un raccord fluidique, selon un deuxième mode de réalisation de l'invention, comprenant un élément de raccord fluidique et un élément de raccord fluidique complémentaire, montrés dans une configuration désaccouplée.
[FIG 6] la figure 6 inclut une vue A), qui est une coupe similaire à celle de la figure 5, où le raccord fluidique est en cours d'accouplement et une vue B), qui est une coupe du raccord suivant le trait de coupe VIb-Vib montré sur la vue A), avec le raccord fluidique dans une configuration accouplée, la vue B) montrant aussi un trait de coupe V-V selon lequel les coupes de la figure 5 et de la vue A) de la figure 6 sont réalisées.
[FIG 7] la figure 7 inclut une vue A), qui est une coupe longitudinale d'un élément de raccord fluidique selon un troisième mode de réalisation de l'invention, montré dans une configuration désaccouplée, inclut une vue B), qui montre un détail de la vue A) selon le cadre VII, à plus grande échelle, et inclut une vue C), qui est une perspective éclatée de l'élément de raccord fluidique des vues A) et B).

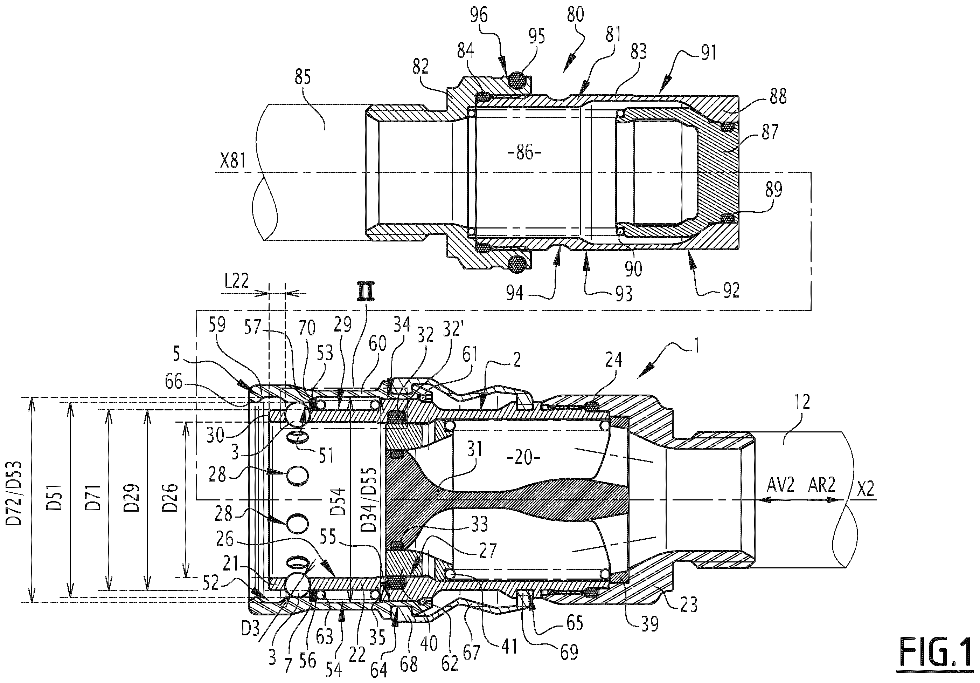

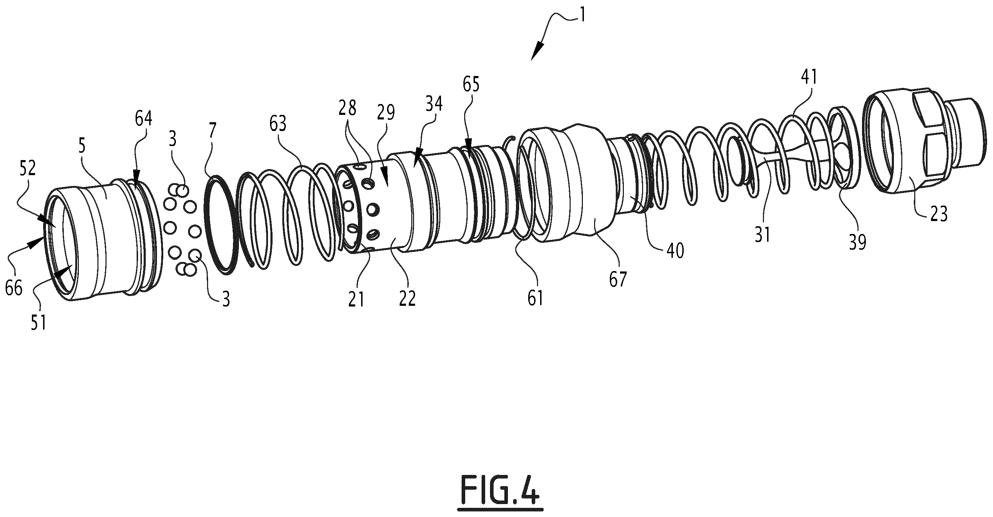

Les figures 1 à 4 montrent un raccord fluidique selon un premier mode de réalisation.

Le raccord fluidique comprend un élément de raccord fluidique 1 et un élément de raccord fluidique complémentaire 80, pour transporter un fluide, de préférence à une pression comprise entre 10 et 16 bars. Le fluide est notamment un fluide de refroidissement. Le raccord fluidique est particulièrement adapté pour être installé sur un véhicule ferroviaire, notamment en extérieur.

L'élément de raccord fluidique complémentaire 80 comprend un corps 81, dit « corps complémentaire ». Le corps complémentaire 81 est tubulaire. Le corps complémentaire 81 est centré sur un axe longitudinal X81.

Le corps complémentaire 81 est traversé de part en part par un conduit interne 86 suivant l'axe X81, le corps complémentaire 81 délimitant le conduit interne 86. Le corps complémentaire 81 comprend avantageusement une partie proximale 82 et une partie distale 83 solidaires l'une de l'autre, par exemple vissées l'une avec l'autre, qui délimitent successivement le conduit interne 86 suivant l'axe X81. L'élément de raccord fluidique complémentaire 80 comprend préférentiellement un joint d'étanchéité 84, interposé entre la partie proximale 82 et la partie distale 83 pour assurer une étanchéité au fluide entre le conduit interne 86 et l'extérieur, à la liaison entre les parties 82 et 83. La partie proximale 83 est reliée à une canalisation 85, en communication fluidique avec le conduit interne 86 via la partie proximale 83, pour le transport du fluide.

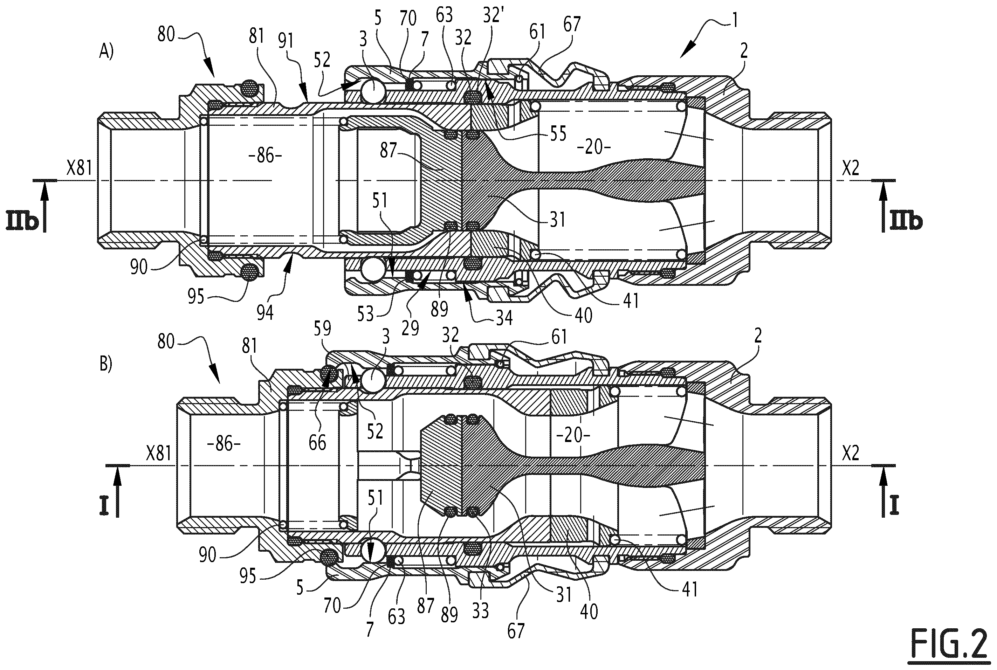

L'élément de raccord fluidique complémentaire 80 comprend préférentiellement une soupape 87, qui est mobile dans le conduit interne 86, suivant l'axe longitudinal X81, entre une position avancée de fermeture montrée sur la figure 1, et une position reculée d'ouverture montrée sur la vue B) de la figure 2. En position avancée, la soupape 87 ferme le conduit interne 86 en coopérant avec un siège 88 appartenant au corps complémentaire 81, préférentiellement à la partie distale 83. Un joint d'étanchéité 89, ici porté par la soupape 87 mais qui pourrait être porté par le siège 88, assure l'étanchéité au fluide de cette fermeture, entre le conduit interne 86 et l'extérieur de l'élément de raccord fluidique complémentaire 80. En position reculée, la soupape 87 est décalée par rapport au siège 88, ouvrant ainsi le conduit interne 86 pour permettre la circulation du fluide depuis ou vers l'extérieur du conduit interne 86 via la partie distale 83.

L'élément de raccord fluidique complémentaire 80 comprend préférentiellement un ressort 90, qui exerce un effort de rappel sur la soupape 87 en prenant appui sur le corps complémentaire 81, pour repousser la soupape 87 vers sa position avancée de fermeture, notamment lorsque la soupape 87 est en position reculée d'ouverture.

La partie distale 83 du corps complémentaire 81 forme une extrémité avant du corps complémentaire 81, opposée à la partie proximale 82 suivant l'axe longitudinal X81. A l'extrémité avant, la partie distale 83 forme avantageusement une surface externe étagée 91. Par « étagée », on entend par exemple que la surface externe étagée 91 forme, suivant l'axe longitudinal X81, une succession de parties de surfaces cylindriques externes, dont le diamètre est de plus en plus réduit jusqu'à l'extrémité avant du corps. Par exemple, la surface externe étagée 91 comprend successivement une surface radiale externe 92 et une surface radiale externe 93, le diamètre de la surface 92 étant plus petit que le diamètre de la surface 93.

Le corps complémentaire 81, de préférence la partie distale 83, comprend avantageusement une gorge externe de verrouillage 94 ménagée à partir de la surface radiale externe 93. La gorge 94 est préférentiellement agencée entre la surface externe étagée 91 et la partie proximale 82.

L'élément de raccord complémentaire 80 comprend avantageusement un joint d'étanchéité 95 en élastomère, de type joint torique, porté par une surface externe du corps complémentaire 81, par exemple par une paroi radiale externe 96 de la partie proximale 82. Le joint 95, ainsi que la paroi radiale externe 96, sont agencés entre la gorge 94 et une extrémité arrière du corps complémentaire 81, opposée à l'extrémité avant.

L'élément de raccord fluidique 1 comprend un corps 2. Le corps 2 est tubulaire et centré sur un axe longitudinal X2, qui est central.

Dans le présent texte, les expressions telles que « axial », « longitudinal » et « radial », « circonférentiel » se rapportant à l'élément de raccord fluidique 1 sont définies par rapport à l'axe X2, sauf mention du contraire. On définit une direction longitudinale avant AV2, parallèle à l'axe X2, qui est dirigée en allant de l'élément de raccord 1 vers l'élément de raccord complémentaire 80 à accoupler. On définit une direction arrière AR2, en sens inverse. Les expressions telles que « avant » et « distal », lorsqu'elles concernent l'élément de raccord 1, font référence à la direction avant AV2. Les expressions telles que « arrière » et « proximal », lorsqu'elles concernent l'élément de raccord 1, font référence à la direction AR2.

On définit une direction radiale comme étant une direction orthogonale et sécante, c'est-à-dire perpendiculaire, à l'axe longitudinal X2. Une surface radiale est une surface cylindrique qui s'étend autour de l'axe longitudinal. Pour un élément donné, le terme « interne » signifie « tourné vers l'axe longitudinal, selon la direction radiale de cet élément », alors que le terme « externe » signifie « tourné dans la direction opposée à l'axe longitudinal, selon la direction radiale de cet élément ».

Lorsque les expressions susmentionnées font référence à l'élément de raccord fluidique complémentaire 80, elles sont définies par rapport à l'axe X81 plutôt qu'à l'axe X2, sauf mention du contraire. L'avant et l'arrière de l'élément de raccord fluidique complémentaire 80 respectivement orientés selon les directions AR2 et AV2.

Le corps 2 de l'élément de raccord 1 est traversé de part en part par un conduit interne 20 suivant l'axe X2. Le corps 2 délimite le conduit interne 20. De préférence, le corps 2 comprend une partie distale 22 et une partie proximale 23, qui sont distinctes et solidaires l'une de l'autre, par exemple en étant vissées l'une avec l'autre. La partie proximale 23 est dans la direction arrière AR2 par rapport à la partie distale 22. L'élément de raccord fluidique 1 comprend avantageusement un joint d'étanchéité 24, interposé entre la partie distale 22 et la partie proximale 23 pour assurer une étanchéité au fluide entre le conduit interne 20 et l'extérieur, à la liaison entre les parties 22 et 23. La partie proximale 23 comprend une extrémité arrière par l'intermédiaire de laquelle la partie proximale 23 est reliée à une canalisation 12, solidarisant la canalisation 12 et le corps 2 selon l'axe longitudinal X2. La canalisation 12 est ainsi en communication fluidique avec le conduit interne 20 via la partie proximale 23, pour le transport du fluide.

Le corps 2, en particulier la partie distale 22, forme une embouchure 21, qui délimite une extrémité avant du conduit interne 20. Le conduit interne 20 débouche hors du corps 2 suivant la direction avant AV2 à l'embouchure 21. Comme montré sur la figure 2, le corps 2 est configuré pour recevoir l'élément de raccord complémentaire 80, en particulier le corps complémentaire 81, emmanché dans le conduit interne 20 via l'embouchure 21. Lors d'un accouplement des éléments de raccord 1 et 80, l'élément complémentaire 80, plus particulièrement la partie distale 83, est emmanché dans le conduit interne 20 suivant la direction arrière AR2 via l'embouchure 21. Lors d'un désaccouplement des éléments de raccord 1 et 80, l'élément complémentaire 80 est retiré hors du conduit interne 20 suivant la direction avant AV2 via l'embouchure 21.

L'élément de raccord fluidique 1 comprend également des billes de verrouillage 3.

Le corps 2 comprend des logements de réception 28, qui sont formés par la partie distale 22. Chaque bille de verrouillage 3 est reçue dans l'un des logements de réception 28. La partie distale 22 forme d'un seul tenant les logements de réception 28 et l'embouchure 21, c'est-à-dire qu'une même pièce continue forme à la fois les logements 28 et l'embouchure 21 Les logements 28 sont régulièrement réparties autour de l'axe X2. Chaque logement 28 traverse radialement la partie distale 22.

Chaque bille de verrouillage 3 est mobile par rapport au corps 2, en étant guidée par le logement 28 dans lequel la bille 3 est reçue, entre une position radiale interne de verrouillage, montrée sur la figure 1 et sur la vue B) de la figure 2, et une position radiale externe de libération, montrée sur la vue A) de la figure 2. De préférence, les billes 3 sont mobiles uniquement radialement dans les logements de réception 28.

En position radiale interne de verrouillage, les billes 3 dépassent radialement de l'embouchure 21 dans le conduit interne 20. Comme montré sur la vue B) de la figure 2, lorsque l'élément de raccord fluidique complémentaire 80 est emmanché dans le conduit interne 20 et que les billes 3 sont maintenues en position radiale interne de verrouillage, les billes 3 s'opposent au retrait de l'élément de raccord fluidique complémentaire 80 hors du conduit interne 20. Pour cela, chaque bille 3 est reçue dans la gorge externe de verrouillage 94 de l'élément complémentaire 80. Dans ce cas, le raccord est en configuration accouplée.

En position radiale externe de libération, les billes 3 ne s'opposent pas au retrait de l'élément de raccord fluidique complémentaire 80 hors de l'élément de raccord fluidique 1. Comme montré sur la figure 2, vue A), les billes 3 sont en effet escamotées radialement vers l'extérieur pour ne pas venir en prise avec la gorge externe de verrouillage 94, autorisant le coulissement du corps complémentaire 81 dans le conduit interne 20, pour l'emmanchement et le retrait de l'élément complémentaire 80, respectivement au cours de l'accouplement et du désaccouplement.

Comme montré sur la figure 1, lorsque l'élément complémentaire 80 n'est pas emmanché, le raccord ou l'élément de raccord fluidique 1 est dans une configuration désaccouplée. Alors que chaque logement 28 présente avantageusement une section cylindrique à base circulaire, chaque logement 28 présente de préférence un resserrement à son extrémité radiale interne pour former butée interne limitant la mobilité de la bille 3 radialement vers l'intérieur, pour éviter que la bille 3 ne s'échappe vers l'intérieur du conduit interne 20 en configuration désaccouplée.

La partie distale 22 comprend une surface radiale interne 26, cylindrique, et une surface radiale externe 29, cylindrique, qui s'étendent chacune suivant la direction arrière AR2 à partir d'une face avant 30 du corps 2 constituant l'extrémité avant du corps 2 au niveau de l'embouchure 21. Les logements de réception 28 débouchent radialement sur l'extérieur sur la surface radiale externe 29 et radialement sur l'intérieur sur la surface radiale interne 26. Ainsi, la paroi de chaque logement 28 présente la même hauteur radiale sur toute la circonférence du logement 28.

En position radiale interne de verrouillage, les billes 3 dépassent radialement de la surface radiale interne 26 de la partie distale 22, mais aussi de la surface radiale externe 29. En position radiale externe de libération, les billes 3 dépassent radialement de la surface radiale externe 29 de la partie distale 22, mais avantageusement pas de la surface radiale interne 26.

La différence entre le diamètre D29 de la surface radiale externe 29 et le diamètre D26 de la surface radiale interne 26 de la partie distale 22 est égale à 0,5 à 0,6 fois le diamètre D3 des billes 3. Autrement dit, l'épaisseur radiale de la partie distale 22 au niveau des logements de réception 28, qui est égale à la hauteur radiale de la paroi de chaque logement 28, est plus petite que l'épaisseur radiale des billes 3, en mesurant entre 0,5 et 0,6 fois le diamètre D3 des billes 3. Ainsi en position radiale externe de déverrouillage, les billes 3 dépassent radialement vers l'extérieur de la surface radiale externe 29 de 0,5 à 0,4 fois le diamètre D3 des billes 3. Le corps 2 a donc été compacté radialement par rapport à l'état de l'art tout en garantissant un guidage suffisant pour les billes 3 par les logements 28 dans leur déplacement entre la position radiale externe de déverrouillage et la position radiale interne de verrouillage.

Suivant la direction AR2 à partir de l'embouchure 21, le conduit interne 20 est délimité par une surface interne étagée 25 appartenant au corps 2. De préférence, la surface interne étagée 25 appartient à la partie distale 22. Par « étagée », on entend par exemple que la surface interne étagée 25 forme, suivant l'axe longitudinal X2, une succession de parties de surfaces radiales internes, dont le diamètre est de plus en plus réduit suivant la direction arrière AR2. Par exemple, la surface interne étagée 25 comprend successivement la surface radiale interne 26 et une surface radiale interne 27, le diamètre D26 de la surface radiale interne 26 étant plus grand que le diamètre de la surface radiale interne 27.

La surface externe étagée 91 du corps complémentaire 81 et la surface interne étagée 25 du corps 2 sont configurées pour coopérer par complémentarité de formes au cours de l'emmanchement de l'élément de raccord fluidique complémentaire 80 dans le conduit interne 20, via l'embouchure 21, pour guider l'emmanchement de l'élément de raccord fluidique complémentaire 80 dans le conduit interne 20 sans coincement. En particulier, le diamètre de la surface radiale interne 27 correspond à celui de la surface radiale externe 92 et le diamètre de la surface radiale interne 26 correspond à celui de la surface radiale externe 93.

Le corps 2 de l'élément de raccord 1 comprend en outre avantageusement un piston central 31, qui est monté dans le conduit interne 20. Le piston central 31 forme une partie du corps 2 dans la mesure où il est retenu entre la partie proximale 23 et la partie distale 22, c'est-à-dire est axialement solidaire des parties distale 22 et proximale 23. Pour cela, le piston 31 comprend avantageusement une base arrière 39, qui est axialement capturée entre la partie distale 22 et la partie proximale 23.

L'élément de raccord 1 comprend en outre avantageusement une soupape 40 montée dans le conduit interne 20. Lorsque le piston central 31 est prévu, la soupape 40 est annulaire. La soupape 40 est mobile suivant l'axe X2 par rapport au corps 2, entre une position avancée de fermeture, montrée sur la figure 1, et une position reculée d'ouverture, montrée sur la vue B) de la figure 2 et située dans la direction arrière AR2 par rapport à la position avancée. En configuration désaccouplée, la soupape 40 est en position avancée. En configuration accouplée, la soupape 40 est en position reculée.

Dans la position avancée de fermeture, la soupape 40 est en butée suivant la direction avant AV2 contre le corps 2, par exemple contre la partie distale 22. En position avancée, la soupape 40 coopère radialement sur l'extérieur avec le corps 2, ici avec la partie distale 22. Pour assurer l'étanchéité de cette coopération, l'élément de raccord 1 comprend avantageusement un joint d'étanchéité 32, de type joint torique en élastomère, ici porté par la partie distale 22 dans le conduit interne 20, et par l'intermédiaire duquel la coopération s'effectue. De préférence, le joint d'étanchéité 32 est disposé dans une gorge 32' ménagée dans la surface radiale interne 27.

En position avancée, si la soupape 40 est annulaire, la soupape 40 coopère radialement sur l'intérieur avec le piston 31. Pour assurer l'étanchéité de cette coopération, l'élément de raccord 1 comprend avantageusement un joint d'étanchéité 33, ici porté par le piston 31 et par l'intermédiaire duquel la coopération s'effectue. En configuration désaccouplée, la soupape 40 ferme donc le conduit interne 20.

En position reculée, la soupape 40 est décalée dans la direction arrière par rapport à sa position avancée. En position reculée, la soupape 40 ne coopère plus avec la partie distale 22 et, si la soupape 40 est annulaire, avec le piston 31. En particulier, la soupape 40 ne coopère plus avec le joint 32 et, si la soupape 40 est annulaire, ne coopère plus avec le joint 24. Le conduit interne 20 est alors ouvert permettant le passage du fluide.

L'élément de raccord 1 comprend avantageusement un ressort 41, qui applique un effort de rappel sur la soupape 40 suivant la direction avant AV2, préférentiellement en prenant appui sur le corps 2, plus particulièrement sur le piston 31, pour repousser la soupape 40 vers la position avancée, notamment lorsque la soupape 40 est en position reculée. Le ressort 41 est avantageusement agencé dans le conduit interne 20, à l'arrière de la soupape 40.

La partie distale 22 comprend également une surface radiale externe 34 et un épaulement 35, qui délimite la surface radiale externe 34 suivant la direction avant AV2 et la surface radiale externe 29 suivant la direction arrière AR2. Le diamètre D34 de la surface radiale externe 34 est strictement supérieur au diamètre D29 de la surface radiale externe 29.

De préférence, le joint d'étanchéité 32 est disposé au même niveau longitudinal que la surface radiale externe 34, c'est-à-dire à la même hauteur que la surface radiale externe 34 suivant l'axe X2. Outre sa coopération avec la soupape 40 en configuration désaccouplée décrite ci-avant, le joint d'étanchéité 32 est préférentiellement destiné à coopérer avec le corps complémentaire 81 en cours d'accouplement et en configuration accouplée, comme montré sur la figure 2.

De préférence, la partie distale 22 est entièrement monobloc, pour le moins forme d'un seul tenant les surfaces 26, 27, 29, 30 et 34, l'embouchure 21 et les logements 28.

De préférence, la longueur L22 de la partie distale 22 à l'avant des logements de réception 28 est inférieure au diamètre D3 des billes 3, et vaut de préférence entre 0,5 et 0,7 fois le diamètre D3 des billes 3. La longueur L22 est la plus petite longueur mesurée parallèlement à l'axe X2, de la face 30 aux logements 28.

L'élément de raccord 1 comprend une bague de verrouillage 5. La bague de verrouillage 5 est montée coulissante autour de la partie distale 22 du corps 2, suivant l'axe X2, entre une position avancée de maintien, montrée sur la figure 1 et la vue B) de la figure 2, et une position reculée de libération, montrée sur la vue A) de la figure 2. La position reculée de libération est dans la direction arrière AR2 par rapport à la position avancée de maintien.

La bague de verrouillage 5 est monopartite et comprend une portion avant 59.

De préférence, la portion avant 59 de la bague dépasse partiellement du corps 2, notamment de la partie distale 22, suivant la direction avant AV2 en configuration désaccouplée. Grâce à cette disposition, la bague 5 protège le corps 2 en configuration désaccouplée.

La portion avant 59 comporte avantageusement une surface avant inclinée 66, interne, qui coopère au moins longitudinalement avec le joint 95 lorsque le raccord est en configuration accouplée, comme montré sur la vue B) de la figure 2. Cette coopération crée une barrière d'étanchéité entre le raccord en configuration accouplée et l'extérieur, qui évite l'entrée de poussières à l'intérieur de la bague 5 en configuration accouplée. En configuration désaccouplée, le joint 95 ne coopère plus avec la surface avant inclinée 66, et cette étanchéité est donc rompue.

La portion avant 59 délimite un volume interne de réception 52, qui est positionné axialement à hauteur des logements 28 lorsque la bague 5 est en position reculée de libération, pour recevoir les billes de verrouillage 3, comme montré sur la vue A) de la figure 2. Le volume interne de réception 52 est agencé dans la direction arrière AR2 par rapport à la surface avant inclinée 66, si elle est prévue. Lorsque la bague de verrouillage 5 est dans la position reculée de libération, la bague 5 ne s'oppose donc pas à ce que les billes 3 se déplacent jusqu'à la position radiale externe de déverrouillage, les billes 3 venant se loger dans le volume interne de réception 52. Comme montré sur la figure 1 et sur la vue B) de la figure 2, lorsque la bague de verrouillage 5 est dans la position avancée, le volume interne de réception 52 est décalé dans la direction avant AV2 par rapport aux logements 28 et ne peut donc plus recevoir les billes 3.

La portion avant 59 de la bague de verrouillage 5 comprend une surface radiale interne de recouvrement 51, adjacente au volume interne de réception 52 et disposée à l'arrière du volume interne de réception 52. Comme montré sur la figure 1 et sur la vue B) de la figure 2, lorsque la bague 5 est dans la position avancée de maintien, la surface radiale interne de recouvrement 51 est axialement à hauteur des logements 28 le long de l'axe X2, c'est-à-dire est en regard radial des billes de verrouillage 3. Dans la position avancée de la bague 5, les billes de verrouillage 3 sont maintenues en position radiale interne de verrouillage par la surface interne de recouvrement 51. Comme montré sur la vue A) de la figure 2, lorsque la bague 5 est dans la position reculée de libération, la surface radiale interne de recouvrement 51 est décalée dans la direction arrière AR2 par rapport aux logements 28 et ne s'oppose donc plus à la mobilité des billes 3 en position radiale externe de déverrouillage.

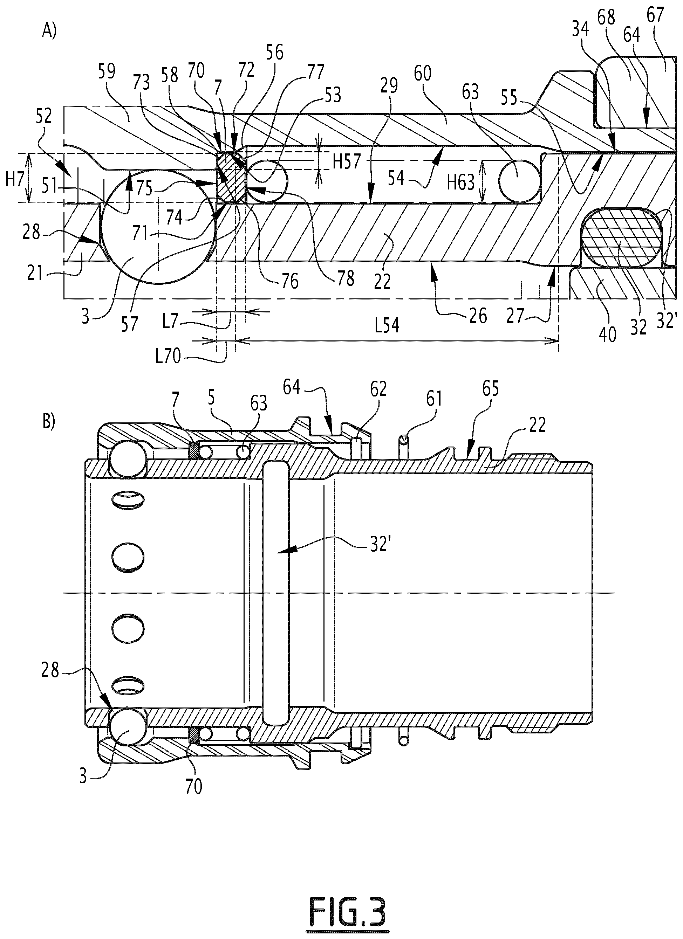

La bague 5 comprend une portion arrière 60, qui s'étend suivant la direction arrière AR2 à partir de la portion avant 59, en particulier qui s'étend longitudinalement en arrière de la surface interne de recouvrement 51 appartenant à la portion avant 59, à partir de la surface arrière 57 jusqu'à une face arrière de la bague de verrouillage 5 formant l'extrémité arrière de la bague de verrouillage 5. La portion arrière 60 comprend une surface radiale interne 53, en arrière de la surface de recouvrement 51, et étant reliée à la surface de recouvrement 51 par une surface arrière 57 de la bague 5, qui est axiale. La surface arrière 57 et la surface radiale interne 53 délimitent avantageusement un lamage interne annulaire 70 de la bague de verrouillage 5. La surface de recouvrement 51 débouche donc dans le lamage interne 70. Ainsi l'élément de raccord fluidique 1 est compact longitudinalement. Les surfaces 53 et 57 sont avantageusement reliées par un congé de raccordement 58, visible sur la vue A de la figure 3. Le diamètre interne D53 de la surface radiale interne 53 est strictement supérieur au diamètre D51 de la surface de recouvrement 51.

La portion arrière 60 de la bague 5 comprend préférentiellement une paroi radiale interne de dégagement 54, en arrière du lamage interne 70, en particulier en arrière de la surface radiale interne 53. La surface radiale interne 53 et la paroi radiale interne de dégagement 54 sont préférentiellement reliées par un chanfrein 56 appartenant à la bague 5. Le chanfrein 56 est par exemple un chanfrein à 30° (degrés).

La portion arrière 60 de la bague 5 comprend une surface radiale interne de guidage 55, en arrière de la paroi radiale interne de dégagement 54. La paroi radiale interne de dégagement 54 est ainsi agencée entre les surfaces radiales internes 53 et 55, suivant l'axe X2. Le diamètre D53 de la surface radiale interne 53 est égal au diamètre D55 de la surface radiale interne 55, à la tolérance de fabrication près. Cela permet de réduire l'encombrement radial du corps 2. La surface radiale interne de guidage 55 est délimitée suivant la direction arrière AR2 par la face arrière de la bague 5.

Entre la surface radiale interne 53 et la surface radiale interne 55, le diamètre interne D54 de la paroi radiale interne de dégagement 54 est supérieur au diamètre interne D53 de la surface radiale interne 53 et au diamètre D55 de la surface radiale interne 55. Comme montré sur la vue A) de la figure 3, la longueur longitudinale L54 de la paroi radiale interne de dégagement 54 est supérieure à la longueur longitudinale L70 du lamage interne 70, de préférence une longueur au moins dix fois supérieure à la longueur longitudinale L70. La longueur longitudinale L70, qui correspond à la profondeur du lamage interne 70, est mesurée suivant la direction arrière AR2, à partir de la surface arrière 57 jusqu'au chanfrein 56, non inclus.

De préférence, la surface de recouvrement 51, la surface arrière 57, la surface radiale interne 53, la paroi radiale interne de dégagement 54 et la surface radiale interne de guidage 55 sont successifs suivant la direction arrière AR2.

Le diamètre D51 de la surface interne de recouvrement 51 constitue le diamètre minimal de la bague 5. En effet, en arrière de la surface arrière 57, le diamètre D53 du lamage interne 70, le diamètre D54 de la paroi radiale interne de dégagement 54, et le diamètre D55 de la surface radiale interne de guidage 55 sont tous de diamètres supérieurs au diamètre D51 de la surface interne de recouvrement 51. Autrement dit, le diamètre intérieur minimal de la portion arrière 60, c'est-à-dire le plus petit des diamètres D53, D54 et D55, est strictement supérieur au diamètre D51. Cela permet de monter la bague 5 autour du corps 2 après le montage des billes 3.

Le corps 2 et la bague de verrouillage 5 sont conformés pour que, au cours de l'assemblage de l'élément de raccord 1, la bague de verrouillage 5 soit montée autour du corps 2 par engagement autour du corps 2 suivant la direction longitudinale arrière AR2 via l'embouchure 21. Pour cela, la bague 5 et le corps 2 sont configurés pour que, une fois la bague 5 montée sur le corps 2, aucune surface avant de la bague de verrouillage 5 ne fait face à une surface arrière du corps 2, parallèlement à l'axe longitudinal X2.

L'élément de raccord 1 comprend un segment d'arrêt 61, distinct de la bague de verrouillage 5, et qui est solidaire de la bague de verrouillage 5 suivant l'axe X2. En particulier, pour être ainsi solidaire de la bague 5, le segment d'arrêt 61 est engagé dans une rainure interne 62 formée sur la surface radiale interne 55. Lorsque la bague 5 est montée sur le corps 2, elle est configurée pour venir en butée suivant la direction avant AV2 contre le corps 2 par l'intermédiaire du segment d'arrêt 61. En particulier, le segment d'arrêt 61 vient en appui contre une surface arrière de la partie distale 22 du corps 2. Comme montré sur la figure 1, la bague 5 dépasse suivant la direction avant AV2, à l'avant de la partie distale 22 du corps 2, lorsque la bague est en position avancée, avec le segment d'arrêt 61 en butée contre la partie distale 22 suivant la direction avant AV2.

La partie distale 22 du corps 2, en particulier la surface radiale externe 34, coopère directement, à jeu radial réduit, avec la surface radiale interne 55 de la bague 5, pour guider radialement la bague 5 pour son coulissement par rapport au corps 2 suivant l'axe X2.

L'élément de raccord 1 comprend en outre une rondelle annulaire 7, distincte de la bague 5 et du corps 2.

La rondelle 7 est interposée radialement entre le corps 2 et la portion arrière 60 de la bague de verrouillage 5.

En configuration montée de la rondelle 7 autour du corps 2 et dans la bague 5, la rondelle 7 est agencée suivant la direction avant AV2 par rapport à la surface radiale externe 34, quelle que soit la position de la bague 5. En configuration assemblée de l'élément de raccord fluidique 1, la rondelle 7 est engagée partiellement dans le lamage interne 70 de la bague de verrouillage 5. Comme montré sur la vue A) de la figure 3, la rondelle 7 comprend une face avant 75, préférentiellement axiale, qui est apte à venir en contact suivant la direction avant AV2 contre la surface arrière 57, également axiale, du lamage interne 70, en configuration assemblée de l'élément de raccord fluidique 1. La rondelle 7 comprend une surface radiale externe 72, préférentiellement cylindrique, qui coopère à jeu radial réduit mais positif, c'est-à-dire avec un ajustement radial glissant, avec la surface radiale interne 53 du lamage interne 70, lorsque la rondelle 7 est montée dans la bague 5. Cet ajustement radial avec jeu a pour avantage de rendre l'ensemble démontable puisque la rondelle 7 est reçue de manière démontable dans le lamage interne 70 et peut donc sortir complètement du lamage interne 70 et de la bague 5.

La rondelle 7 comprend une surface radiale interne 71, préférentiellement cylindrique, qui coopère à jeu radial réduit mais positif, c'est-à-dire avec un ajustement glissant, avec la surface radiale externe 29 de la partie distale 22 du corps 2. La rondelle 7 comprend aussi une face arrière 78, axiale.

La rondelle 7 est fermée, c'est-à-dire qu'elle s'étend de manière continue tout autour de l'axe X2 en configuration assemblée de l'élément de raccord fluidique 1, en formant une bague annulaire fermée. Une rondelle 7 fermée permet de maitriser finement les ajustements radiaux entre rondelle 7 et corps 2 et entre rondelle 7 et bague de verrouillage 5.

La rondelle 7 est préférentiellement de section externe rectangulaire, non carrée. Les quatre côtés de la section rectangulaire correspondent aux quatre faces 71, 72, 75 et 78. En variante elle peut être de section carrée. Comme montré sur la vue A) de la figure 3, la hauteur radiale maximale H7 de la rondelle 7 est préférentiellement supérieure ou égale à la longueur longitudinale maximale L7 de la rondelle 7. La rondelle 7 étant moins longue que haute, on limite le risque d'arc-boutement de la rondelle 7.

Le fait que la rondelle 7 présente une section rectangulaire implique que la rondelle présente quatre arêtes 73, 74, 76 et 77. L'arête 73 est à l'intersection des faces 75 et 72. L'arête 74 est à l'intersection des faces 75 et 71. L'arête 77 est à l'intersection des faces 72 et 78. L'arête 76 est à l'intersection des surfaces 71 et 78. On prévoit avantageusement que chacune de ces arêtes est chanfreinée, par exemple avec des chanfreins à 45°. Le chanfrein de l'arête 73, issu des surfaces 72 et 75 de la rondelle, est supérieur au congé de raccordement 58 du lamage interne 70, ce qui permet un appui plan de la rondelle 7 suivant la direction AV2 contre la surface arrière 57 du lamage interne 70, via la face avant axiale 75. Les chanfreins aident aussi au centrage de la rondelle 7 lors du montage de la rondelle 7 dans la bague 5 et lors des mouvements de la bague 5 par rapport au corps 2.

Axialement, le lamage interne 70 est entièrement disposé dans la direction arrière AR2 par rapport aux logements de réception 28, quelle que soit la position de la bague de verrouillage 5 entre la position avancée et la position reculée. La face avant 75 de la rondelle 7 fait alors partiellement face aux billes 3, directement, selon la direction avant AV2. En d'autres termes, rien n'est interposé longitudinalement entre la face avant 75 et les billes 3. De préférence, la rondelle 7 reste distante des billes 3, quelle que soit la position de la bague de verrouillage 5 entre la position avancée, en butée avant contre la partie distale 22 et la position reculée. La longueur longitudinale L70 du lamage interne 70 est inférieure à la longueur longitudinale maximale L7 de la rondelle 7 si bien qu'une partie de la rondelle 7 est disposée hors du lamage interne 70 lorsque la rondelle 7 est en contact avant contre la bague 5.

Le diamètre interne D71 de la rondelle 7 est strictement inférieur au diamètre interne minimal de la bague 5. Le diamètre interne minimal de la bague 5 est le plus petit diamètre parmi le diamètre interne minimal de la portion arrière 60 et celui de la portion avant 59. Pour le présent mode de réalisation, le diamètre D51 de la surface interne de recouvrement 51 est le plus petit diamètre de la bague 5.

Le diamètre externe D72 de la surface radiale externe 72 de la rondelle 7 est supérieur au diamètre interne minimal de la bague 5. Le diamètre interne minimal de la portion arrière 60 de la bague 5, à distinguer du diamètre minimal de la bague 5, est supérieur ou égal au diamètre externe D72 de la rondelle 7. En d'autres termes, aucune surface arrière de la rondelle 7 ne fait face à une surface avant de la bague 5, ce qui permet de monter la rondelle 7 dans la bague 5 par l'arrière de la bague 5. Le diamètre externe D72 de la rondelle 7 est égal au diamètre D34 de la surface radiale externe 34 de la partie distale 22. Ainsi le diamètre D34 est strictement supérieur au diamètre D51. De préférence, la hauteur radiale H57 du lamage interne 70, qui correspond à la moitié de la différence entre les diamètres D53 et D51, est supérieure à 0,3 fois la hauteur radiale maximale H7 de la rondelle 7 et inférieure à 0,6 fois la hauteur radiale maximale H7 de la rondelle 7. Ainsi, la rondelle 7 dépasse hors du lamage interne 70 radialement vers l'intérieur tout en coopérant de manière satisfaisante avec la surface arrière 57.

Dans toutes positions de la bague de verrouillage 5 entre la position avancée et la position reculée, la rondelle 7 est apte à coopérer à jeu radial réduit avec le corps 2, via la surface radiale externe 29, et la bague 5, via la surface radiale interne 53, pour guider radialement la bague par rapport au corps 2, pour le coulissement. Dans toutes ces positions, la bague 5, en particulier la surface radiale interne 55 de la portion arrière 60, coopère également à jeu radial réduit positif directement avec la surface radiale externe 34 de la partie distale 22 du corps 2. Il n'y a pas d'autre guidage radial direct entre la bague 5 et le corps 2. En particulier, aucune surface de la bague 5 disposée à l'avant de la surface interne de recouvrement 51 ne coopère radialement avec le corps 2 pour guider la bague 5.

Aucune surface avant de la rondelle 7 ne fait face longitudinalement à une surface arrière du corps 2. Autrement dit, la rondelle 7 et le corps 2 sont conformés pour permettre un montage de la rondelle 7 par l'avant du corps 2.

Le matériau de la rondelle 7 est choisi pour faciliter le glissement de la rondelle 7 sur le corps 2 lors des mouvements de la bague 5. De préférence, et notamment pour ce mode de réalisation, la rondelle 7 est en aluminium anodisé dur. De préférence, la partie distale 22 du corps 2 est en aluminium.

Grâce à la rondelle 7 et à la surface radiale interne 55, les surfaces de la bague 5 à l'avant de la surface interne de recouvrement 51 ne servent pas au guidage radial de la bague 5. C'est cela qui permet de prévoir une mise en contact la surface avant inclinée 66 de la bague 5 avec le joint 95 porté par le corps complémentaire 81 pour faire un pare-poussière. C'est cela qui permet aussi de raccourcir la bague 5 à l'avant du volume interne de réception 52 par rapport à l'art antérieur, améliorant la compacité longitudinale de l'élément de raccord 1.

L'élément de raccord 1 comprend un ressort 63, qui est un ressort de compression. Le ressort 63 est préférentiellement un ressort hélicoïdal. En particulier, le ressort 63 est formé par un fil hélicoïdal à section circulaire. En variante non représentée, le ressort peut être un ressort à fil carré.

Le ressort 63 est monté autour de la partie distale 22 du corps 2 et radialement à l'intérieur de la bague 5 en regard radial de la paroi radiale interne de dégagement 54. Le ressort 63 et prend appui, suivant la direction arrière AR2, sur le corps 2, en particulier sur l'épaulement 35 de la partie distale 22 du corps 2. Le ressort 63 prend appui, suivant la direction avant AV2, sur la face axiale arrière 78 de la rondelle 7. Autrement dit, le ressort 63 est longitudinalement interposé entre le corps 2 et la rondelle 7. Par conséquent, le ressort 63 est apte à repousser la bague de verrouillage 5 vers sa position avancée, en repoussant la rondelle 7 qui repousse à son tour la bague 5. La hauteur radiale maximale H7 de la rondelle 7 est supérieure ou égale à la hauteur radiale H63 du ressort 63, c'est-à-dire ici, le diamètre du fil du ressort 63. La différence entre les diamètres D34 et D29 correspond sensiblement à la hauteur radiale H63 du ressort 63.

L'élément de raccord 1 comprend avantageusement un fourreau 67. Le fourreau 67 est élastiquement déformable, préférentiellement en polymère. Le fourreau 67 est monté autour de la partie distale 22 et de la bague 5. Pour cela, une extrémité avant 68 du fourreau 67 est engagée dans une rainure externe 64 de la bague 5 et une extrémité arrière 69 du fourreau 67 est engagée dans une rainure externe 65 de la partie distale 22 située dans la direction longitudinale arrière AR2 par rapport à la deuxième surface radiale externe 34 de la partie distale 22 et par rapport à l'extrémité arrière de la bague de verrouillage 5 lorsque celle-ci est en position reculée de libération. Ainsi, l'extrémité avant 68 est longitudinalement solidaire de la bague 5, alors que l'extrémité arrière 69 est longitudinalement solidaire du corps 2. Le fourreau 67 crée une barrière d'étanchéité entre la partie distale 22 et la bague 5, vis-à-vis de l'extérieur de l'élément de raccord 1, pour éviter l'entrée de poussières ou autres pollutions à l'intérieur de la portion arrière 60 de bague 5, quelle que soit la position de la bague 5 par rapport au corps 2. La déformation élastique du fourreau 67 permet le rapprochement et l'éloignement des extrémités avant 68 et arrière 69 selon l'axe X2.

Le montage de l'élément de raccord 1 s'effectue selon le procédé de montage suivant.

Le procédé comprend un engagement du ressort 63 sur la surface radiale externe 29 de la partie distale 22, par l'avant de la partie distale 22, suivant la direction arrière AR2 par rapport au corps 2. A ce stade, on prévoit préférentiellement que la partie proximale 23 du corps 2 n'est pas encore solidaire de la partie distale 22.

Le procédé comprend ensuite, ou simultanément, un engagement de la rondelle 7 sur la surface radiale externe 29, par l'extrémité avant de la partie distale 22, suivant la direction arrière AR2 par rapport au corps 2.

Le procédé de montage comprend ensuite un engagement des billes 3 dans leur logement de réception 28 puis un montage de la bague 5 par engagement de la bague 5 autour de la partie distale 22 par l'avant de la partie distale 22 suivant la direction arrière AR2. Ce faisant, la bague 5 est positionnée autour de la partie distale 22, des billes 3, de la rondelle 7 et du ressort 63. L'engagement de la bague 5 est poursuivi jusqu'à ce que la rainure interne 62 soit dégagée vers l'arrière de la surface radiale externe 34 de la partie distale 22. Lors du montage de la bague 5 autour de la rondelle 7, les chanfreins des arêtes 73 et 74 de la rondelle 7 facilitent l'engagement de la rondelle 7 dans le lamage interne 70 de la bague 5. Lors du montage de la bague 5 autour de la rondelle 7, le chanfrein 56 de la bague 5, formé entre la paroi radiale interne de dégagement 54 et le lamage interne 70, guide la rondelle 7 pour son engagement dans le lamage interne 70. En particulier, le chanfrein 56 de la bague 5 est moins incliné par rapport à l'axe central longitudinal X2 que ne l'est le chanfrein de l'arête 73 de la rondelle 7. Le diamètre D54 de la paroi radiale interne de dégagement 54 permet que la paroi radiale interne de dégagement 54 ne soit pas soumise au frottement de la rondelle 7 lorsque la bague 5 est mise en place autour de la rondelle 7, tant que la rondelle 7 n'a pas atteint le lamage interne 70. De plus, la bague 5 est préférentiellement en aluminium pour faciliter la mise en place de la rondelle 7 dans le lamage interne 70.

De préférence, comme le montre la vue B) de la figure 3 où la bague 5 est en position reculée au maximum, avec le ressort 63 compressé au maximum, on prévoit que les billes 3 sont montées avant la bague 5, car la bague 5 en position reculée ne dégage pas un espace suffisant pour insérer les billes de verrouillage 3 dans les logements 28. La bague de verrouillage 5 en position reculée de libération maintient alors chacune des billes 3 en prise avec son logement de réception 28. Le procédé comprend ensuite préférentiellement une mise en place du segment d'arrêt 61 dans la rainure 62. Une fois le segment d'arrêt 61 en place, le procédé comprend avantageusement un relâchement de la bague 5, que le ressort 63 repousse alors jusqu'à la position avancée. Alors, la bague 5 est en butée suivant la direction AV2 contre la partie distale 22 via le segment d'arrêt 61.

Le procédé comprend ensuite avantageusement un montage du fourreau 67 autour de la partie distale 22 et de la bague 5, avec engagement de l'extrémité avant 68 dans la rainure externe 64 de la bague 5 et engagement de l'extrémité arrière 69 dans la rainure externe 65 de la partie distale 22.

Le procédé comprend ensuite préférentiellement un montage de la soupape annulaire 40, du ressort 41 et du piston 31 à l'intérieur de la partie distale 22. De préférence, préalablement à ce montage, le piston 31 est déjà équipé du joint d'étanchéité 33 et la partie distale 22 est déjà équipée du joint d'étanchéité 32.

Le procédé comprend ensuite une solidarisation de la partie proximale 23 à la partie distale 22, par exemple par vissage et interposition du joint 24. On prévoit avantageusement que les parties distale 22 et proximale 23 prennent en sandwich la base arrière 39 du piston 31, ce qui solidarise le piston aux parties distale 22 et proximale 23 le long de l'axe longitudinal X2.

Une utilisation du raccord inclut l'accouplement du raccord, qui s'effectue comme suit.

L'accouplement comprend un alignement de l'élément de raccord 1 avec l'élément de raccord complémentaire 80. Autrement dit, on dispose les éléments 1 et 80 de sorte que les axes X2 et X81 sont coaxiaux. L'accouplement comprend ensuite un engagement du corps complémentaire 81 dans l'embouchure 21 du corps 2. L'engagement est effectué alors que la bague 5 est maintenue en position reculée de libération par un utilisateur, si bien que les billes 3 sont radialement repoussées par le corps complémentaire 81 en position radiale externe dans le volume de réception 52 et laissent le passage pour le corps complémentaire 81 dans le corps 2. Alors que la bague 5 est en position reculée, le fourreau 67 s'est déformé élastiquement pour permettre le déplacement de la bague 5 jusqu'à cette position reculée, sans rupture de la barrière d'étanchéité constituée par le fourreau 67. Lors de l'engagement, le corps complémentaire 81 parvient au contact de la soupape annulaire 40 dans la direction arrière AR2, tandis que le piston 31 parvient en contact longitudinal avec la soupape 87 dans la direction avant AV2. L'accouplement comprend, que, l'engagement se poursuivant, les soupape annulaire 40 et soupape 87 sont repoussées vers leur position reculée d'ouverture respective. L'accouplement comprend que, au cours de l'engagement, le corps complémentaire 81 a déjà pris étanchéité avec le corps 2 via le joint d'étanchéité 32 porté par la partie distale 22, lorsque les soupapes 87 et 40 rompent l'étanchéité, respectivement avec le corps complémentaire 81 via le joint 89 et avec le corps 2 via les joints 32 et 33.

L'accouplement comprend ensuite, un positionnement de la gorge externe de verrouillage 94 en regard radial des billes 3, alors que l'engagement se poursuit. Alors que la bague 5, relâchée par l'utilisateur, était maintenue en position reculée contre l'action du ressort 63 par les billes 3, elles-mêmes maintenues en position radiale externe par le corps 81 engagé, le positionnement de la gorge externe 94 en regard radial des billes 3 autorise les billes 3 à être mises en position radiale interne sous l'action de la bague 5 repoussée vers la position avancée par le ressort 63. Les billes 3 étant mises en position radiale interne, elles sont engagées dans la gorge de verrouillage 94. La surface de recouvrement 51 de la bague 5 maintient alors les billes 3 en position interne de verrouillage. Les billes 3 forment alors obstacle au retrait du corps complémentaire 81 hors de l'élément de raccord 1. Les soupapes 40 et 87 ouvertes laissent passer le fluide entre les conduits internes 20 et 86. La surface avant inclinée 66 de la bague coopère avec le joint 95 du corps complémentaire, créant la barrière d'étanchéité. La configuration accouplée est atteinte. Dans cette configuration accouplée, le mouvement de la bague 5 suivant la direction avant AV2 est limité par le contact de la bague 5 contre le joint 95. Alors que la bague de verrouillage 5 est en position avancée de maintien, le fourreau 67 s'est déformé élastiquement pour permettre le déplacement de la bague 5 jusqu'à cette position avancée, sans rupture de la barrière d'étanchéité constituée par le fourreau 67.

Lors de l'emmanchement du corps complémentaire 81 dans le corps 2, il y a engagement puis coopération par complémentarité de formes de la surface interne étagée 25 du corps 2 avec la surface externe étagée 91 du corps complémentaire 81 pour un guidage de l'emmanchement sans coincement.

Lors du déplacement de la bague de verrouillage 5 de sa position avancée à sa position reculée, la rondelle 7 est déplacée par la bague 5 suivant la direction arrière AR2. Cela est obtenu par coopération de la surface arrière 57 de la bague 5 avec la face avant 75 de la rondelle 7. Lors de ce déplacement, la rondelle 7 guide radialement le mouvement de la bague 5 par rapport au corps 2. La zone de coopération radiale de la rondelle 7 sur le corps 2 est mobile longitudinalement le long de la surface radiale externe 29 de la partie distale 22 tandis que la zone de coopération radiale de la rondelle 7 sur la bague 5 est inchangée et se produit à la surface interne de guidage 53 du lamage interne 70. Lors de ce déplacement de la bague de verrouillage 5, la surface interne de guidage 55 de la bague 5 est également en coopération radiale avec la surface radiale externe 34 du corps 2.

En sens inverse, lors du déplacement de la bague de verrouillage 5 de sa position reculée à sa position avancée, la rondelle 7 suit le déplacement de la bague 5 vers l'avant, en ce que la rondelle 7 est repoussée sur l'avant par le ressort 63, de sorte à être maintenue au contact de la surface arrière 57 de la bague 5 par le ressort 63. Alors, la rondelle 7 guide radialement le mouvement de la bague 5 par rapport au corps 2. La zone de coopération radiale de la rondelle 7 sur le corps 2 est mobile longitudinalement le long de la surface radiale externe 29 de la partie distale 22 tandis que la zone de coopération radiale de la rondelle 7 sur la bague 5 est inchangée et se produit à la surface interne de guidage 53 du lamage interne 70. Lors de ce déplacement de la bague 5, la surface interne de guidage 55 de la bague 5 est également en coopération radiale avec la surface radiale externe 34 du corps.

Pour le désaccouplement, la bague de verrouillage 5 est déplacée en position reculée de libération pour permettre aux billes de verrouillage 3 de se déplacer en position radiale externe de déverrouillage et ainsi permettre de retirer l'élément de raccord fluidique complémentaire 80 hors du corps 2.

En variante, après montage de la bague 5 autour de la rondelle 7 avec la rondelle 7 en appui avant contre la bague 5 suivant la direction avant AV2, la rondelle 7 est soudée à la bague 5 par transparence, par exemple à l'aide d'un procédé de soudage au laser, de manière à solidariser la bague 5 et la rondelle 7 suivant l'axe X2 après montage de la rondelle 7 dans la bague 5. La rondelle 7 devient alors indémontable de la bague 5.

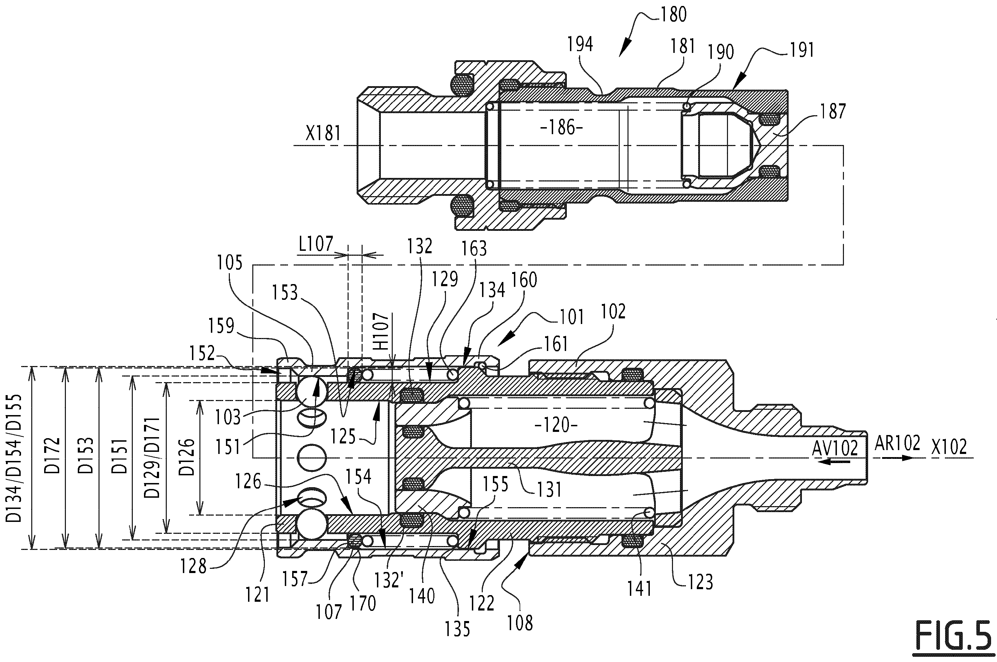

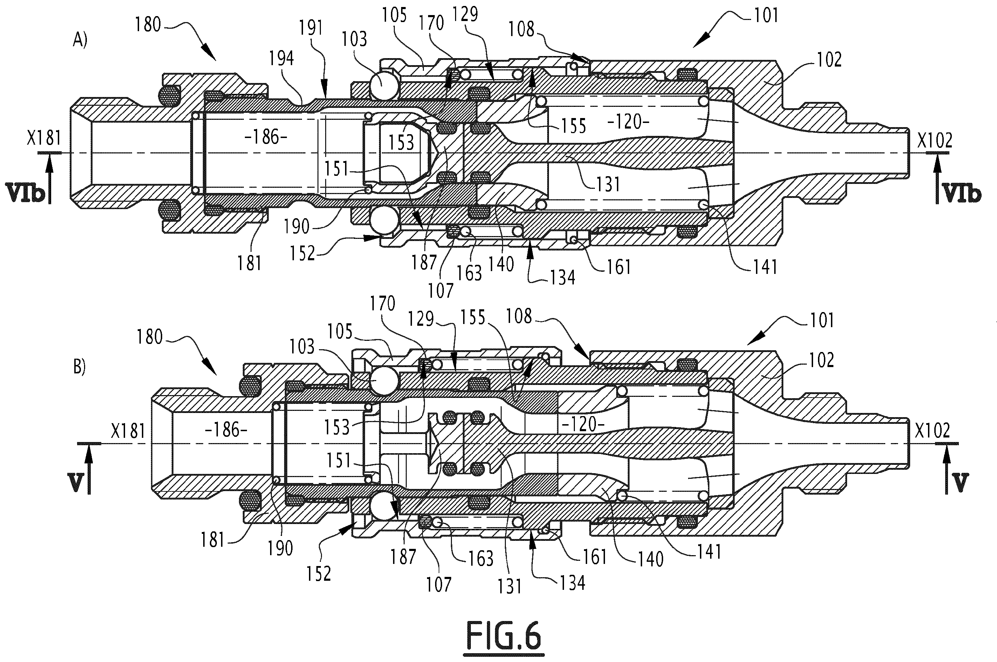

Les figures 5 et 6 montrent un raccord fluidique selon un deuxième mode de réalisation. Le raccord des figures 5 et 6 présente une structure et un fonctionnement similaires au mode de réalisation des figures 1 à 4, hormis pour les différences décrites ci-après. Les éléments du raccord des figures 5 et 6 qui correspondent ou sont identiques à ceux du raccord des figures 1 à 4 sont désignés avec la même expression et un numéro de référence augmenté de 100.

Le raccord fluidique des figures 5 et 6 comprend un élément de raccord fluidique 101 et un élément de raccord fluidique complémentaire 180, pour transporter un fluide.

L'élément de raccord fluidique complémentaire 180 comprend un corps complémentaire 181 tubulaire et centré sur un axe longitudinal X181.

Le corps complémentaire 181 est traversé de part en part par un conduit interne 186 suivant l'axe X181, en le délimitant. Le conduit interne 186 est destiné à être relié à une canalisation. L'élément 180 comprend préférentiellement une soupape 187, qui est mobile dans le conduit interne 186, suivant l'axe longitudinal X81, entre une position avancée de fermeture montrée sur la figure 5, et une position reculée d'ouverture montrée sur la vue B) de la figure 6. En position avancée, la soupape 187 ferme le conduit interne 186. En position reculée, la soupape 187 ouvre le conduit interne 86 pour permettre la circulation du fluide.

L'élément de raccord fluidique 180 comprend préférentiellement un ressort 190, qui exerce un effort de rappel sur la soupape 187 en prenant appui sur le corps complémentaire 181, pour repousser la soupape 187 vers sa position avancée de fermeture.

Le corps complémentaire 181 forme avantageusement une surface externe étagée 191, à une extrémité avant du corps complémentaire 181.

Le corps complémentaire 181 comprend avantageusement une gorge externe de verrouillage 194, préférentiellement adjacente à la surface externe étagée 191.

L'élément de raccord fluidique 101 comprend un corps 102, tubulaire et centré sur un axe longitudinal X102.

Le corps 102 délimite et est traversé par un conduit interne 120 suivant l'axe X102. De préférence, le corps 102 comprend une partie distale 122 et une partie proximale 123 distinctes et solidaires. Le conduit interne 120 est destiné à être relié à une canalisation via la partie proximale 123.

La partie distale 122, forme une embouchure 121, qui délimite une extrémité avant du conduit interne 120, débouchant à l'embouchure 121. Comme montré sur la figure 1, le corps 102 est configuré pour recevoir l'élément de raccord complémentaire 180, en particulier le corps complémentaire 181, emmanché dans le conduit interne 120 via l'embouchure 121.

L'élément de raccord fluidique 101 comprend également des billes de verrouillage 103. La partie distale 122 forme des logements de réception 128, où les billes 103 sont respectivement reçues. La partie distale 122 forme d'un seul tenant les logements 128 et l'embouchure 121. Chaque logement 128 traverse radialement la partie distale 122. Chaque bille de verrouillage 103 est mobile par rapport au corps 102 dans le logement 128, entre une position radiale interne de verrouillage, montrée sur la figure 5 et sur la vue B) de la figure 6, et une position radiale externe de libération, montrée sur la vue A) de la figure 6.

En position radiale interne de verrouillage, les billes 103 dépassent radialement de l'embouchure 121 dans le conduit interne 120. Comme montré sur la vue B) de la figure 6, lorsque l'élément de raccord fluidique complémentaire 180 est emmanché dans le conduit interne 120 et que les billes 103 sont en position radiale interne de verrouillage, les billes 103 s'opposent au retrait de l'élément de raccord fluidique complémentaire 180 hors du conduit interne 120. Pour cela, chaque bille 103 est reçue dans la gorge externe de verrouillage 194 de l'élément complémentaire 180. Dans ce cas, le raccord est en configuration accouplée.

En position radiale externe de libération, les billes 103 ne s'opposent au retrait de l'élément de raccord fluidique complémentaire 180. Comme montré sur la figure 6, vue A), les billes 103 sont en effet escamotées radialement vers l'extérieur pour ne pas venir en prise avec la gorge externe de verrouillage 194, pour l'emmanchement et le retrait de l'élément complémentaire 180.

Comme montré sur la figure 5, lorsque l'élément complémentaire 180 n'est pas emmanché, le raccord ou l'élément de raccord fluidique 1 est dans une configuration désaccouplée.

La partie distale 122 comprend une surface radiale interne 126, cylindrique, et une surface radiale externe 129, cylindrique, qui s'étendent suivant la direction arrière AR102 à partir de l'embouchure 121. Les logements de réception 28 débouchent radialement sur l'extérieur sur la surface radiale externe 129 et radialement sur l'intérieur sur la surface radiale interne 126. De préférence, la différence entre le diamètre D129 de la surface radiale externe 129 et le diamètre D126 de la surface radiale interne 126 est comprise entre 0,5 et 0,6 fois le diamètre des billes de verrouillage 103.

Suivant la direction AR102 à partir de l'embouchure 121, le conduit interne 120 est délimité par une surface interne étagée 125 appartenant au corps 102. La surface interne étagée 125 comprend notamment la surface radiale interne 126. La surface externe étagée 191 du corps complémentaire 181 et la surface interne étagée 125 du corps 102 sont configurées pour coopérer par complémentarité de formes au cours de l'emmanchement de l'élément de raccord fluidique complémentaire 180 dans le conduit interne 120, via l'embouchure 121.

L'élément de raccord 101 comprend en outre avantageusement un piston central 131, qui est monté dans le conduit interne 120. Le piston central 131 est axialement solidaire des parties distale 122 et proximale 123.

L'élément de raccord 101 comprend en outre avantageusement une soupape 140 qui est annulaire. La soupape 140 est mobile suivant l'axe X102 par rapport au corps 102, entre une position avancée de fermeture, montrée sur la figure 5, et une position reculée d'ouverture, montrée sur la vue B) de la figure 6 et dans la direction arrière AR102 par rapport à la position avancée. En configuration désaccouplée, la soupape 140 est en position avancée. En configuration accouplée, la soupape 140 est en position reculée.

Dans la position avancée de fermeture, la soupape 140 est en butée suivant une direction avant AV102, opposée à la direction arrière AR102, contre le corps 102. En position avancée, la soupape 140 coopère radialement de manière étanche sur l'extérieur avec le corps 102 et sur l'intérieur avec le piston 31, pour fermer le conduit interne 120.

En position reculée, la soupape 140 est décalée dans la direction arrière par rapport à sa position avancée. En position reculée, la soupape 140 ne coopère plus avec la partie distale 122 et avec le piston 131, de sorte à ouvrir le conduit interne 120 pour le passage du fluide.

L'élément de raccord 101 comprend avantageusement un ressort 141 pour repousser la soupape 140 vers la position avancée.

La partie distale 122 comprend également une surface radiale externe 134 et un épaulement 135, qui délimite la surface radiale externe 134 et la surface radiale externe 129 l'une de l'autre. La surface radiale externe 134 est agencée dans la direction arrière AR102 par rapport à la surface radiale externe 129, à partir de l'épaulement 135. Le diamètre D134 de la surface radiale externe 34 est supérieur au diamètre D129 de la surface radiale externe 29.

Un joint d'étanchéité 132 est disposé dans une gorge 132', dans le conduit 120 au même niveau longitudinal que la surface radiale externe 129, c'est-à-dire à la même hauteur que la surface radiale externe 129 suivant l'axe X2. Le joint 132 coopère avec la soupape 140 lorsqu'elle est en position avancée pour assurer l'étanchéité de la fermeture du conduit 120 en configuration désaccouplée, comme montré sur la figure 5, et coopère avec le corps complémentaire 181 de l'élément de raccord complémentaire 180 en cours d'accouplement et en configuration accouplée, comme montré sur la figure 6.

L'élément de raccord 101 comprend une bague de verrouillage 105 monobloc, une rondelle 107 et un ressort 163. La bague de verrouillage 105 est montée coulissante autour de la partie distale 122, suivant l'axe X102, entre une position avancée de maintien, montrée sur la figure 5 et la vue B) de la figure 6, et une position reculée de libération, montrée sur la vue A) de la figure 6. La position reculée de libération est dans la direction AR102 par rapport à la position avancée de maintien.

La bague de verrouillage 105 comprend une portion avant 159.

Comme montré sur la figure 5, contrairement à la portion avant 59 de la bague 5, la portion avant 159 de la bague 105 ne dépasse pas du corps 102 suivant la direction AV102, même lorsque la bague de verrouillage 105 est dans la position avancée. Contrairement à l'élément de raccord complémentaire 80, l'élément de raccord complémentaire 180 est dépourvu de joint apte à coopérer avec la bague de verrouillage 105. Il n'est donc pas nécessaire de prévoir une surface axiale inclinée pour la bague 105, qui correspondrait à la surface avant 66 de la bague 5. La compacité axiale de l'élément 101 en est améliorée.

La portion avant 159 délimite un volume interne de réception 152, constituant une extrémité avant de la bague 105. Le volume 152 est positionné axialement à hauteur des logements 128 lorsque la bague 105 est en position reculée de libération, pour recevoir les billes de verrouillage 103, comme montré sur la vue A) de la figure 6. Lorsque la bague de verrouillage 105 est dans la position reculée de libération, la bague 105 ne s'oppose donc pas à ce que les billes 103 se déplacent jusqu'à la position radiale externe de déverrouillage, les billes 103 venant se loger dans le volume interne de réception 152. Comme montré sur la figure 5 et sur la vue B) de la figure 6, lorsque la bague de verrouillage 105 est dans la position avancée, le volume de réception 152 est décalé dans la direction avant AV102 par rapport aux logements 128 et ne peut donc plus recevoir les billes 103.

La portion avant 159 de la bague de verrouillage 105 comprend une surface radiale interne de recouvrement 151, adjacente au volume interne de réception 152 et disposée à l'arrière du volume interne de réception 152. Comme montré sur la figure 5 et sur la vue B) de la figure 6, lorsque la bague 105 est dans la position avancée de maintien, la surface radiale interne de recouvrement 151 est axialement à hauteur des logements 128, c'est-à-dire est en regard radial des billes de verrouillage 103. Dans la position avancée de la bague 105, les billes de verrouillage 103 sont maintenues en position radiale interne de verrouillage par la surface interne de recouvrement 151. Comme montré sur la vue A) de la figure 6, lorsque la bague 105 est dans la position reculée de libération, la surface radiale interne de recouvrement 151 est décalée dans la direction arrière AR102 par rapport aux logements 128 et ne s'oppose donc plus à la mise en position radiale externe de déverrouillage des billes 103.

La bague 105 comprend une portion arrière 160, qui s'étend suivant la direction arrière AR102 à partir de la portion avant 159, en particulier à partir de la surface interne de recouvrement 151 appartenant à la portion avant 159. La portion arrière 160 comprend une surface radiale interne 153, en arrière de la surface de recouvrement 151, et étant reliée à la surface de recouvrement 151 par une surface arrière 157, qui est axiale. La surface arrière 157 et la surface radiale interne 153 forment avantageusement un lamage interne 170. La surface interne de recouvrement 151 débouche donc dans le lamage interne 170. Les surfaces 153 et 157 sont avantageusement reliées par un congé de raccordement similaire au congé 58. Le diamètre interne D153 de la surface radiale interne 153 est strictement supérieur au diamètre D151 de la surface interne de recouvrement 151.

La portion arrière 160 de la bague 105 délimite préférentiellement une paroi radiale interne de dégagement 154, en arrière du lamage interne 170, en particulier en arrière de la surface radiale interne 153.

La portion arrière 160 comprend une surface radiale interne de guidage 155, en arrière de la paroi radiale interne de dégagement 154. La paroi radiale interne de dégagement 154 est ainsi agencée entre les surfaces radiales internes 153 et 155, suivant l'axe X102. A la différence du précédent mode de réalisation, on prévoit ici que le diamètre D153 de la surface radiale interne 153 est strictement inférieur au diamètre D155 de la surface radiale interne 155. En revanche, le diamètre D155 de la surface radiale interne 155 est préférentiellement égal au diamètre D154 de la paroi radiale interne de dégagement 154. Cela a pour avantage que, au montage, les frottements entre la bague 105 et la rondelle 107 sont limités sur toute la course de recouvrement de la rondelle 107 par la bague 105, notamment à hauteur de la surface radiale interne 155.

Le diamètre D151 de la surface interne de recouvrement 151 constitue le diamètre minimal de la bague 105. En effet, en arrière de la surface arrière 157, les diamètres D153, D154 et D155 sont supérieurs au diamètre D151. Autrement dit, le diamètre intérieur minimal de la portion arrière 160, c'est-à-dire le plus petit des diamètres D153, D154 et D155, est strictement supérieur au diamètre D151.

Le corps 102 et la bague de verrouillage 105 sont conformés pour que, au cours de l'assemblage de l'élément de raccord 101, la bague de verrouillage 105 soit montée autour du corps 102 par engagement autour du corps 102 suivant la direction longitudinale arrière AR102 via la partie distale 122. Pour cela, la bague 105 et le corps 102 sont configurés pour que, une fois la bague 105 montée sur le corps 102, aucune surface avant de la bague de verrouillage 105 ne fait face à une surface arrière du corps 102, parallèlement à l'axe longitudinal X102.

L'élément de raccord 101 comprend un segment d'arrêt 161, distinct de la bague de verrouillage 105, et qui est solidaire de la bague de verrouillage 105. Lorsque la bague 105 est montée sur le corps 102, elle est configurée pour venir en butée suivant la direction avant AV102 contre le corps 102 par l'intermédiaire du segment d'arrêt 161. En position avancée, la bague 105 est en appui contre le corps 102 via le segment d'arrêt 161.

La partie distale 122 du corps 102, en particulier la surface radiale externe 134, coopère directement, à jeu radial réduit positif, avec la surface radiale interne 155 de la bague 105, pour guider radialement la bague 105 pour son coulissement par rapport au corps 102 suivant l'axe X102.

Alors que, pour l'élément de raccord 1, le corps 2 ne comprend aucune butée arrière pour la bague de verrouillage 5, le corps 102, en particulier la partie proximale 123, forme une butée arrière 108, pour limiter le coulissement de la bague 105 par rapport au corps suivant la direction arrière AR102. En position reculée, la bague 105 est en butée contre la butée arrière 108, comme montré sur la vue A) de la figure 6. Cela permet d'éviter une sur-sollicitation du ressort 163 lorsque l'on tire sur la bague 105 contre l'action du ressort 163 pour mettre la bague 105 en position reculée et de limiter la course de la bague 105 par rapport au corps 102 dans la direction arrière AR102 à une position reculée dans laquelle il n'y a pas suffisamment d'espace entre la bague 105 et le corps 102 pour que les billes 103 puissent sortir des logements 128.

La rondelle 107 est distincte de la bague 105 et du corps 102. La rondelle 107 est interposée radialement entre le corps 102 et la portion arrière 160 de la bague de verrouillage 105.

A la différence de la rondelle 7 qui est de section externe rectangulaire, la rondelle 107 est de section externe ronde. Le fait que la rondelle 107 soit de section ronde confère des avantages similaires à ceux obtenus grâce aux chanfreins de la rondelle 7. La hauteur radiale maximale H107 de la rondelle est préférentiellement égale à la longueur maximale L107 de la rondelle 107.

En configuration montée de la rondelle 107 autour du corps 102 et dans la bague 105, la rondelle 107 est agencée suivant la direction avant AV102 par rapport à la surface radiale externe 134, quelle que soit la position de la bague 105. En configuration montée, la rondelle 107 est engagée dans le lamage interne 170 de la bague de verrouillage 105 et est apte à venir en contact suivant la direction avant AV102 contre la surface arrière 157. Ici, ce contact est circulaire. La rondelle 107 coopère à jeu radial réduit mais positif avec la surface radiale interne 153 du lamage interne 170, lorsque la rondelle 107 est montée dans la bague 105. Cet ajustement radial avec jeu a pour avantage de rendre l'ensemble démontable. La rondelle 107 coopère à jeu radial réduit mais positif avec la surface radiale externe 129 de la partie distale 122 du corps 102.

Axialement, le lamage interne 170 est entièrement disposé dans la direction arrière AR102 par rapport aux logements de réception 128, quelle que soit la position de la bague de verrouillage 105 entre la position avancée et la position reculée. La rondelle 107 fait alors partiellement face aux billes 103 selon la direction avant AV102, tout en restant préférentiellement distante des billes 103 quelle que soit la position de la bague 105 par rapport au corps 102.

Le diamètre interne D171 de la rondelle 107 est strictement inférieur au diamètre interne minimal de la bague 105. Le diamètre interne minimal de la bague 105 est le plus petit diamètre parmi le diamètre interne minimal de la portion arrière 160 et celui de la portion avant 159. Pour le présent mode de réalisation, le diamètre D151 de la surface interne de recouvrement 151 est le plus petit diamètre de la bague 105.

Le diamètre externe D172 de la rondelle 107 est supérieur au diamètre interne minimal de la bague 105. Le diamètre interne minimal de la portion arrière 160 de la bague 105, à distinguer du diamètre minimal de la bague 105, est supérieur ou égal au diamètre externe D172 de la rondelle 107. En d'autres termes, aucune surface arrière de la rondelle 107 ne fait face à une surface avant de la bague 105, ce qui permet de monter la rondelle 107 dans la bague 105 par l'arrière de la bague 105. Le diamètre externe D172 de la rondelle 107 est égal au diamètre D134 de la surface radiale externe 134 de la partie distale 122.

Dans toutes positions de la bague de verrouillage 105 entre la position avancée et la position reculée, la rondelle 107 est apte à coopérer à jeu radial réduit avec le corps 102, via la surface radiale externe 129, et la bague 105, via la surface radiale interne 153, pour guider radialement la bague 105 par rapport au corps 102, pour le coulissement. Dans toutes ces positions, la bague 105, en particulier la surface radiale interne 155 de la portion arrière 160, coopère également à jeu radial réduit positif directement avec la surface radiale externe 134 de la partie distale 122 du corps 102. Il n'y a pas d'autre guidage radial entre la bague 105 et le corps 102.

Aucune surface avant de la rondelle 107 ne fait face longitudinalement à une surface arrière du corps 102. Autrement dit, la rondelle 107 et le corps 102 sont conformés pour permettre un montage de la rondelle 107 par l'avant du corps 102.

Le matériau de la rondelle 107 est choisi pour faciliter le glissement de la rondelle 107 sur le corps 102 lors des mouvements de la bague 105. Pour ce mode de réalisation où la rondelle 107 est de section ronde, la rondelle 107 est préférentiellement en polymère, par exemple du PEEK (Polyétheréthercétone) ou du PA6.6. (Polyamide 6.6). Le corps 102 est préférentiellement en aluminium.

Le ressort 163 est un ressort de compression, monté autour de la partie distale 122 du corps 102 et radialement à l'intérieur en regard de la paroi radiale interne de dégagement 154. Le ressort 163 prend appui, suivant la direction arrière AR102, sur le corps 102, en particulier sur l'épaulement 135. Le ressort 163 prend appui, suivant la direction avant AV102, sur la rondelle 107. Autrement dit, le ressort 163 est longitudinalement interposé entre le corps 102 et la rondelle 107. Par conséquent, le ressort 163 est apte à repousser la bague de verrouillage 105 vers sa position avancée, en repoussant la rondelle 107 au contact de la bague 105, avec la rondelle 107 qui repousse à son tour la bague 105.

Contrairement à l'élément de raccord 1 qui comprend le fourreau 67, l'élément de raccord 101 ne comprend pas de fourreau.

Le montage de l'élément de raccord 101 s'effectue selon un procédé identique à celui de l'élément de raccord 1, hormis qu'il n'y a pas de fourreau.

En variante non représentée, la rondelle 107 n'est pas une rondelle fermée mais est une rondelle fendue élastique qui est apte à être mise en place autour du corps 2 par élargissement puis retour en position libre, sans être mise en place autour du corps 2 par l'avant de la partie distale 22 du corps 2.

L'utilisation de l'élément de raccord 101 est identique à celle de l'élément de raccord 1.

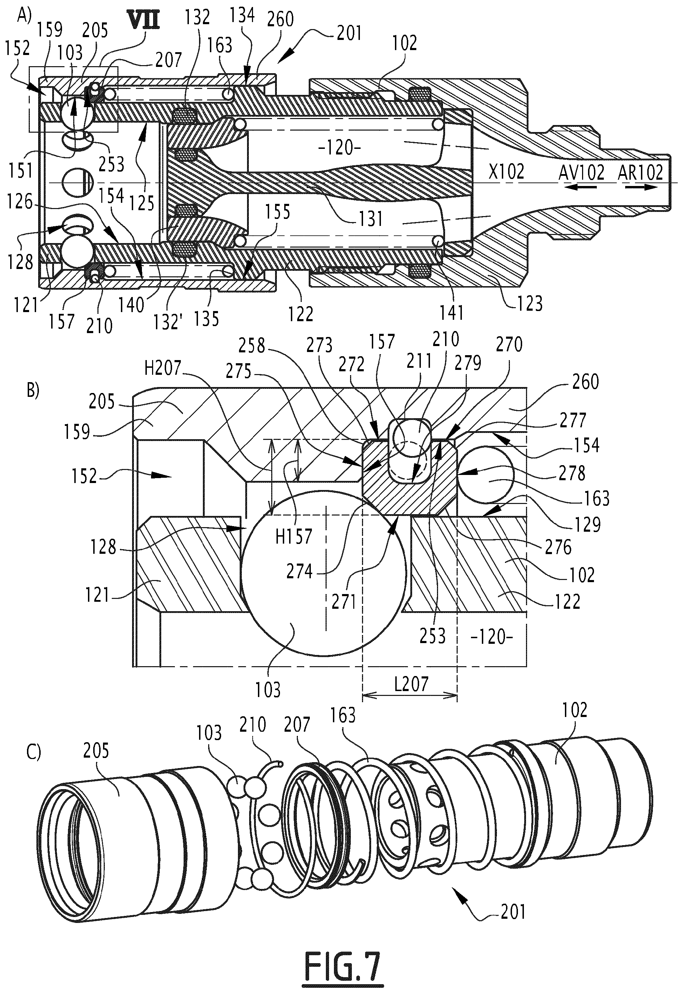

La figure 7 montre un élément de raccord fluidique 201 selon un troisième mode de réalisation. L'élément de raccord fluidique 201 est identique à l'élément de raccord fluidique 101, sauf pour la bague de verrouillage 205, qui remplace la bague 105 et la rondelle 207, qui remplace la rondelle 107. Les composants et caractéristiques identiques pour les éléments 101 et 201 portent le même signe de référence, y compris concernant des caractéristiques de la bague 205, alors que chaque composant et caractéristique de l'élément 201 qui sont modifiés par rapport à ceux de l'élément 101, portent un numéro de référence augmenté de 100.

Hormis pour les différences ci-dessous, la bague 205 comporte les mêmes caractéristiques que les bagues 5 et 105 et fonctionne de la même façon. Hormis pour les différences ci-dessous, la rondelle 207 comporte les mêmes caractéristiques que la rondelle 7 et fonctionne de la même façon.

La bague 205 comprend la portion avant 159, avec la surface radiale interne de recouvrement 151 et le volume interne de réception 152 qui ne sont pas modifiés. La bague 205 comprend une portion arrière 260, en remplacement de la portion arrière 160. La portion arrière 260 conserve la paroi radiale interne de dégagement 154, la surface radiale interne 155 et la surface arrière 157, qui ne sont pas modifiées. En revanche, l'élément de raccord fluidique 201 ne comprend pas le segment d'arrêt 161, si bien que la portion arrière 260 ne comprend pas de gorge pour le recevoir. De plus, à la place de la surface radiale interne 153, la portion arrière 260 comprend une surface radiale interne 253 modifiée par rapport à la surface 153 et formant un lamage interne 270 avec la surface arrière 157. Un congé de raccordement 258, similaire au congé 58 est avantageusement prévu entre la surface arrière 157 et la surface radiale interne 253.

La rondelle 207, à la manière de la rondelle 7, comprend une face avant 275, préférentiellement axiale, correspondant à la face avant 75, qui est apte à venir en contact suivant la direction avant AV2 contre la surface arrière 157, également axiale, de la bague 205, lorsque la rondelle 207 est montée. La rondelle 207 comprend une surface radiale interne 271, correspondant à la surface radiale interne 71, préférentiellement cylindrique, qui coopère à jeu radial réduit mais positif, c'est-à-dire avec un ajustement radial glissant, avec la surface radiale externe 129. La rondelle 207 comprend aussi une face arrière 278, correspondant à la face arrière 78 et contre laquelle le ressort 163 vient en appui suivant la direction avant AV102 pour repousser la bague 205 vers la position avancée.

La rondelle 207 comprend une surface radiale externe 272, qui coopère à jeu radial réduit mais positif, c'est-à-dire avec un ajustement radial glissant, avec la surface radiale interne 153 du lamage interne 270, pour le montage de la rondelle 207 dans la bague 205. L'élément de raccord 201 comprend un jonc 210, fendu, qui est élastiquement déformable. Le jonc 210 est logé dans une rainure externe 279 appartenant à la rondelle 207, formée dans la surface radiale externe 272, préférentiellement tout autour de la rondelle 207. Ainsi, la surface radiale externe 272 correspond à la surface radiale externe 72, mais s'en distingue par la présence de la rainure 279.

En configuration montée de la rondelle 207, le jonc 210 est dans une configuration élargie, comme montré en trait plein sur la vue B) de la figure 7. Alors que la surface radiale interne 253 de la bague 205 est par ailleurs identique à la surface radiale interne 153, une rainure interne 211 est ménagée en creux dans la surface radiale interne 253, préférentiellement tout autour de l'axe X102. En configuration montée de la rondelle 207 et du jonc 210, le jonc 210 en configuration élargie coopère avec la rainure interne 211 pour limiter le mouvement longitudinal de la rondelle 207 suivant l'axe X102, par rapport à la bague 205. Le jonc 210 est pour cela reçu à la fois partiellement dans la rainure 211 et partiellement dans la rainure 279. Ainsi, la rondelle 207 est solidaire longitudinalement du jonc 210. En particulier, en configuration élargie du jonc 210, la rondelle 207 ne peut sortir complètement du lamage interne 270. La rondelle 207 est donc longitudinalement rendue solidaire longitudinalement de la bague 205 après montage, via le jonc 210, et est donc reçue de manière non démontable dans le lamage interne 270.

Aux fins du montage de la rondelle 207 dans la bague 205, le jonc 210 est avantageusement apte à se déformer élastiquement vers une configuration rétractée, montrée en trait discontinu sur la vue B) de la figure 7, où le jonc 210 est entièrement reçu dans la rainure externe 279. La rainure externe 279 a une section supérieure ou égale à la section du fil du jonc 210, pour que le jonc 210 puisse être ainsi reçu. Le jonc 210 est configuré pour revenir à la configuration élargie lorsqu'il n'est pas maintenu en configuration rétractée, par élasticité du jonc 210.

Pour le montage de la rondelle 207, le jonc 210 est en configuration rétractée, de sorte à être entièrement reçu dans la rainure externe 279, alors que la rondelle 207 est montée autour de la partie distale 122, de sorte que le jonc 210 autorise l'engagement de la bague 205 autour de la rondelle 207 et de la partie distale 122. On peut prévoir que le jonc 210 soit mis en configuration rétractée par la bague 205 elle-même, dont l'extrémité arrière est conformée en conséquence. Pour le montage, la bague 205 est engagée autour de la rondelle 207 et du jonc 210 en configuration rétractée, maintenant le jonc 210 en configuration rétractée jusqu'à ce que la rondelle 207 soit en appui dans la direction avant AV102 contre la bague 205 et que le jonc 210 soit en regard radial de la rainure interne 211 de la bague 205. Une fois en regard radial, le jonc 210 revient vers la configuration élargie par élasticité, de sorte que la rondelle 207 est capturée par la bague 205.

La rondelle 207 présente une section externe rectangulaire, non carrée, ce qui implique que la rondelle présente quatre arêtes 273, 274, 276 et 277, correspondant respectivement aux arêtes 73, 74, 76 et 77. Les quatre côtés de la section rectangulaire correspondent aux quatre faces 271, 272, 275 et 278. L'arête 273 est à l'intersection des faces 275 et 272. L'arête 274 est à l'intersection des faces 275 et 271. L'arête 277 est à l'intersection des faces 272 et 278. L'arête 276 est à l'intersection des surfaces 271 et 278. On prévoit avantageusement que chacune de ces arêtes est chanfreinée, par exemple avec des chanfreins à 45°. Le chanfrein de l'arête 273, issu des surfaces 272 et 275, est supérieur au congé de raccordement 258, ce qui permet l'appui de la rondelle 207 suivant la direction AV102 contre la surface arrière 157 du lamage interne 270, via la face avant 275. Les chanfreins aident aussi au centrage de la rondelle 207 lors du montage de la rondelle 207 dans la bague 205.

Contrairement à la rondelle 7, la hauteur radiale maximale H207 de la rondelle 207 est préférentiellement inférieure ou égale à la longueur maximale L207 de la rondelle 207. En configuration assemblée de l'élément de raccord fluidique 201, lorsque la bague 205 est en position avancée, la rondelle 207 vient avantageusement en butée contre les billes 103 suivant direction avant AV102, préférentiellement via le chanfrein de l'arête 274. En position avancée, la bague de verrouillage 205 est donc en appui contre le corps 102 via le jonc 210, via la rondelle 207 et via les billes 103. Cela permet de se passer du segment d'arrêt 161, simplifiant le procédé de montage de l'élément de raccord 201. Le lamage interne 270 est disposé selon la direction arrière AR102 par rapport aux billes 103 quelle que soit la position de la bague de verrouillage 205 entre la position avancée de maintien et la position reculée de libération. En d'autres termes, aucune surface avant des billes 103 n'est tournée longitudinalement vers le lamage interne 270.

La rondelle 207 fait alors partiellement face aux billes 103, directement, selon la direction avant AV102. La longueur longitudinale du lamage interne 270 est inférieure à la longueur longitudinale L207 de la rondelle 207 si bien qu'une partie de la rondelle 207 est disposée hors du lamage interne 270 lorsque la rondelle 207 est en contact avant contre la bague 205.

Les considérations dimensionnelles de diamètres s'appliquant à la rondelle 7, s'appliquent mutatis mutandis à la rondelle 207. Comme pour les autres modes de réalisation, le diamètre interne minimal de la bague de verrouillage 205 en arrière de la surface radiale interne de recouvrement 151 est strictement supérieur au diamètre de la surface radiale interne de recouvrement 151 et est supérieur ou égal au diamètre externe de la rondelle 207. Le diamètre interne de la rondelle 207 est quant à lui strictement inférieur au diamètre de la surface radiale interne de recouvrement 151. Le diamètre de la surface radiale externe 134 est strictement supérieur au diamètre de la surface radiale externe 129. Le diamètre interne minimal de la bague de verrouillage 205 est le diamètre de la surface radiale interne de recouvrement 151.

De préférence, pour le mode de réalisation de la figure 7, comme pour les autres modes de réalisation, la longueur longitudinale de la paroi radiale interne de dégagement 154 est supérieure à la longueur longitudinale du lamage interne 270.

De préférence, pour le mode de réalisation de la figure 7, comme pour les autres modes de réalisation, l'épaisseur radiale du corps 102 au niveau des logements de réception 128 est comprise entre 0,5 et 0,6 fois le diamètre des billes de verrouillage 103.

De préférence, pour le mode de réalisation de la figure 7, comme pour les autres modes de réalisation, la hauteur radiale maximale H207 de la rondelle 207 est supérieure ou égale à la hauteur radiale du ressort 163.

De plus, dans le mode de réalisation de la figure 7, la hauteur radiale H157 du lamage interne 270 est comprise entre 0,3 fois et 0,6 fois la hauteur radiale maximale H207 de la rondelle 207 et la hauteur radiale H207 de la rondelle 207 est supérieure à la hauteur radiale du ressort 163.

## Revendications

1. Elément de raccord fluidique (1; 101; 201), comprenant :
- un corps (2; 102) centré sur un axe longitudinal (X2 ; X102), délimitant un conduit interne (20; 120) et étant destiné à être relié à une canalisation (12), le conduit interne (20; 120) débouchant hors du corps (2; 102) à une embouchure (21; 121) du corps (2; 102), suivant une direction longitudinale avant (AV2; AV102) parallèle à l'axe longitudinal (X2 ; X102), le corps (2; 102) étant configuré pour recevoir un élément de raccord fluidique complémentaire (80; 180), emmanché dans le conduit interne (20; 120), via l'embouchure (21; 121), suivant une direction longitudinale arrière (AR2; AR102) opposée à la direction longitudinale avant (AV2; AV102) ;
- des billes de verrouillage (3; 103), mobiles dans des logements de réception (28; 128) du corps (2 ; 102) entre :
• une position radiale interne de verrouillage, dans laquelle les billes de verrouillage (3; 103) dépassent dans le conduit interne (20; 120) pour s'opposer à un retrait de l'élément de raccord fluidique complémentaire (80; 180) hors du conduit interne (20; 120), dans une configuration accouplée de l'élément de raccord fluidique (1; 101; 201) et de l'élément de raccord fluidique complémentaire (80; 180), et
• une position radiale externe de déverrouillage, dans laquelle les billes de verrouillage (3; 103) ne s'opposent pas au retrait de l'élément de raccord fluidique complémentaire (80; 180) hors du corps (2 ; 102);
- une bague de verrouillage (5; 105; 205), le corps (2; 102) et la bague de verrouillage (5; 105; 205) étant conformés pour que la bague de verrouillage (5; 105; 205) soit montée autour du corps (2; 102) par engagement autour du corps (2; 102) par l'embouchure (21 ; 121) suivant la direction longitudinale arrière (AR2; AR102), la bague de verrouillage (5; 105; 205) ainsi montée étant coulissante par rapport au corps (2; 102) le long de l'axe longitudinal (X2 ; X102), entre :
• une position avancée de maintien, dans laquelle une surface radiale interne de recouvrement (51; 151), appartenant à la bague de verrouillage (5; 105; 205), est apte à coopérer avec les billes de verrouillage (3; 103) pour maintenir les billes de verrouillage (3; 103) en position radiale interne de verrouillage, le diamètre interne minimal (D53, D55; D153) de la bague de verrouillage (5; 105; 205) en arrière de la surface radiale interne de recouvrement (51; 151) étant strictement supérieur au diamètre (D51) de la surface radiale interne de recouvrement (51; 151), et
• une position reculée de libération, dans laquelle la bague de verrouillage (5; 105; 205) ne s'oppose pas à la mobilité des billes de verrouillage (3; 103) vers leur position radiale externe de déverrouillage ; et
- un ressort (63; 163), monté autour du corps (2; 102) et apte à repousser la bague de verrouillage (5; 105; 205) vers la position avancée de maintien ;
**caractérisé en ce que** :
- l'élément de raccord fluidique (1; 101; 201) comprend en outre une rondelle (7; 107; 207), interposée radialement entre le corps (2; 102) et la bague de verrouillage (5; 105; 205), le ressort (63; 163) étant interposé longitudinalement entre le corps (2; 102) et la rondelle (7; 107; 207), alors que la rondelle (7; 107; 207) est apte à venir en appui contre une surface arrière (57; 157) de la bague de verrouillage (5; 105; 205) suivant la direction longitudinale avant (AV2; AV102) pour repousser la bague de verrouillage (5; 105; 205) vers la position avancée de maintien ;
- le diamètre interne minimal (D53, D55; D153) de la bague de verrouillage (5; 105; 205) en arrière de la surface arrière (57 ; 157) est supérieur ou égal au diamètre externe (D72; D172) de la rondelle (7; 107; 207) ;
- le diamètre interne (D71; D171) de la rondelle (7; 107; 207) est strictement inférieur au diamètre (D51) de la surface radiale interne de recouvrement (51; 151) de la bague de verrouillage (5; 105; 205) ;
- dans toutes les positions longitudinales de la bague de verrouillage (5; 105; 205) par rapport au corps (2 ; 102) entre la position avancée de maintien et la position reculée de libération :
• la rondelle (7; 107; 207) est apte à coopérer radialement avec une première surface radiale interne (53; 153; 253) de la bague de verrouillage (5; 105; 205) et avec une première surface radiale externe (29; 129) du corps (2; 102) pour le guidage radial de la bague de verrouillage (5; 105; 205) par rapport au corps (2; 102), et
• la bague de verrouillage (5; 105; 205) est apte à coopérer radialement avec une deuxième surface radiale externe (34; 134) du corps (2; 102) pour le guidage radial de la bague de verrouillage (5; 105; 205) par rapport au corps (2; 102), le diamètre (D34; D134) de la deuxième surface radiale externe (34; 134) étant strictement supérieur au diamètre (D29; D129) de la première surface radiale externe (29; 129) ;
- le corps (2 ; 102) forme d'un seul tenant l'embouchure (21; 121), les logements de réception (28; 128) et la deuxième surface radiale externe (34; 134); et
- la première surface radiale interne (53; 153; 253) et la surface arrière (57; 157) délimitent un lamage interne (70 ; 170 ; 270) de la bague de verrouillage (5; 105; 205) pour la réception de la rondelle (7; 107; 207), le lamage interne (70 ; 170 ; 270) étant agencé suivant la direction longitudinale avant (AV2; AV102) par rapport à la deuxième surface radiale externe (34; 134) et suivant la direction longitudinale arrière (AR2; AR102) par rapport aux billes de verrouillage (3; 103).

2. Elément de raccord fluidique (1 ; 101 ; 201) selon la revendication 1, dans lequel la rondelle (7; 107; 207) est une bague annulaire fermée et dans lequel la rondelle (7; 107; 207) et le corps (2 ; 102) sont conformés pour que la rondelle (7; 107; 207) soit montée autour du corps (2; 102) par engagement autour du corps (2; 102) par l'embouchure (21 ; 121) suivant la direction longitudinale arrière (AR2 ; AR102).

3. Elément de raccord fluidique (1; 101; 201) selon l'une des revendications précédentes, dans lequel :
- la bague de verrouillage (5; 105; 205) comprend une paroi radiale interne de dégagement (54; 154), dont le diamètre interne (D54; D154) est strictement supérieur au diamètre (D53) de la première surface radiale interne (53; 153; 253) et qui est agencée suivant la direction longitudinale arrière (AR2; AR102) par rapport au lamage interne (70 ; 170 ; 270) ; et
- la longueur longitudinale (L54) de la paroi radiale interne de dégagement (54 ; 154) est supérieure à la longueur longitudinale (L70) du lamage interne (70 ; 170 ; 270).

4. Elément de raccord fluidique (1) selon la revendication 3, dans lequel :
- la bague de verrouillage (5) comprend une deuxième surface radiale interne (55), par l'intermédiaire de laquelle la bague de verrouillage (5) coopère radialement avec la deuxième surface radiale externe (34) ; et
- le diamètre (D53) de la première surface radiale interne (53) et le diamètre (D55) de la deuxième surface radiale interne (55) sont égaux ; et
- la paroi radiale interne de dégagement (54) est agencée, parallèlement à la direction longitudinale arrière (AR2), entre la première surface radiale interne (53) et la deuxième surface radiale interne (55).

5. Elément de raccord fluidique (1; 101; 201) selon l'une des revendications précédentes, dans lequel la hauteur radiale (H57 ; H157) du lamage interne (70 ; 170 ; 270) est comprise entre 0,3 fois et 0,6 fois la hauteur radiale maximale (H7 ; H107) de la rondelle (7; 107; 207).

6. Elément de raccord fluidique (1; 101; 201) selon l'une des revendications précédentes, dans lequel la surface radiale interne de recouvrement (51; 151) débouche longitudinalement dans le lamage interne (70 ; 170 ; 270).

7. Elément de raccord fluidique (1; 201) selon l'une quelconque des revendications précédentes, dans lequel la rondelle (7; 207) est de section externe rectangulaire, formant quatre arêtes (73, 74, 76, 77 ; 273, 274, 276, 277) qui sont chanfreinées.

8. Elément de raccord fluidique (1; 101) selon l'une quelconque des revendications précédentes, dans lequel la hauteur radiale maximale (H7; H107) de la rondelle (7; 107) est supérieure ou égale à la longueur longitudinale maximale (L7; L107) de la rondelle (7; 107).

9. Elément de raccord fluidique (1; 101; 201) selon l'une quelconque des revendications précédentes, dans lequel l'épaisseur radiale du corps (2; 102) au niveau des logements de réception (28 ; 128) est comprise entre 0,5 et 0,6 fois le diamètre (D3) des billes de verrouillage (3; 103).

10. Elément de raccord fluidique (1; 101) selon l'une quelconque des revendications précédentes, dans lequel la rondelle (7; 107) est reçue de manière démontable dans le lamage interne (70 ; 170).

11. Elément de raccord fluidique (1; 101; 201) selon l'une quelconque des revendications précédentes, dans lequel la hauteur radiale maximale (H7 ; H107 ; H207) de la rondelle (7 ; 107 ; 207) est supérieure ou égale à la hauteur radiale (H63) du ressort (63 ; 163).

12. Elément de raccord fluidique (1) selon l'une quelconque des revendications précédentes, dans lequel l'élément de raccord fluidique (1) comprend en outre une soupape (40) et un joint d'étanchéité (32), qui est disposé dans une gorge (32') ménagée dans le corps (2) longitudinalement à hauteur de la deuxième surface radiale externe (34), le joint d'étanchéité (32) étant configuré pour coopérer avec la soupape (40) lorsque l'élément de raccord fluidique (1) est dans une configuration désaccouplée.

13. Raccord fluidique, comprenant :
- l'élément de raccord fluidique (1; 101; 201) selon l'une quelconque des revendications précédentes ; et
- l'élément de raccord fluidique complémentaire (80; 180), qui comprend un corps complémentaire (81; 181) pourvu d'une gorge de verrouillage (94; 194), configurée pour recevoir les billes de verrouillage (3; 103) lorsque le raccord fluidique est dans la configuration accouplée.

14. Raccord fluidique selon la revendication 13, dans lequel :
- le corps complémentaire (81; 181) comprend une surface externe étagée (91; 191) ;
- le corps (2; 102) comprend une surface interne étagée (25; 125), délimitant le conduit interne (20; 120) ; et
- la surface externe étagée (91; 191) et la surface interne étagée (25 ; 125) sont configurées pour coopérer par complémentarité de formes au cours de l'emmanchement de l'élément de raccord fluidique complémentaire (80; 180) dans le conduit interne (20; 120).

15. Raccord fluidique selon l'une quelconque des revendications 13 ou 14, dans lequel :
- l'élément de raccord fluidique (1) comprend en outre un fourreau (67), qui est monté autour du corps (2) et de la bague de verrouillage (5) et qui comprend une extrémité avant (68), solidaire longitudinalement de la bague de verrouillage (5), et une extrémité arrière (69), solidaire longitudinalement du corps (2), le fourreau (67) étant déformé élastiquement lorsque la bague de verrouillage (5) se déplace entre la position avancée de maintien et la position reculée de libération ;
- l'élément de raccord fluidique complémentaire (80) comprend un joint d'étanchéité (95), qui est porté par une surface externe (96) du corps complémentaire (81) ; et
- la bague de verrouillage (5) comprend une surface avant (66), qui coopère longitudinalement avec le joint d'étanchéité (95) de l'élément de raccord fluidique complémentaire (80) lorsque le raccord fluidique est en configuration accouplée.
